# EUROPEAN PATENT SPECIFICATION

(11) **EP 1 678 886 B1**
(45) Date of publication and mention of the grant of the patent: **18.02.2009**
(21) Application number: 03818899.1
(22) Date of filing: 27.10.2003
(51) Int. Cl.: H04L 12/56, H04L 12/28, H04W 88/04

(54) **METHOD AND DEVICES FOR RELAYED PEER-TO-PEER COMMUNICATIONS BETWEEN TERMINALS IN MOBILE NETWORKS**
VERFAHREN UND EINRICHTUNG FÜR WEITERGELEITETE PEER-TO-PEER-KOMMUNIKATION ZWISCHEN ENDGERÄTEN IN MOBIL-NETZWERKEN
PROCEDE ET DISPOSITIF DE COMMUNICATION DU TYPE HOMOLOGUE A HOMOLOGUE PAR RELAIS ENTRE LES TERMINAUX DES RESEAUX MOBILES

(43) Date of publication of application: 12.07.2006
(73) Proprietor: Nokia Corporation, 02150 Espoo (FI)
(72) Inventor: RANTAPUSKA, Olli, FIN-02150 Espoo (FI); TEINILÄ, Jaakko, FIN-02210 Espoo (FI)
(74) Representative: Becker Kurig Straus
(86) International application number: PCT/IB2003/004738
(87) International publication number: WO 2005/041496

(56) References cited:
- WO-A-20/04064337
- WO-A1-03/051012
- US-A1- 2002 143 855
- US-B1- 6 338 087
- US-B1- 6 535 498

## Description

The present invention relates to a method and devices for peer-to-peer communications in mobile networks and especially to relayed peer-to-peer communications between mobile terminals operable in public land mobile networks (PLMN).

Current cellular network implementations, in particular 2^{nd} generation and 2.5 generation cellular networks do not allow for terminal end-to-end communications with exception of voice call communications and message communications. The capability of mobile terminals to communicate over cellular network increases continuously, especially processing capabilities and storage capabilities. In parallel with an increasing demand in complex terminal client applications terminal end-to-end peer-to-peer data communication is an issue of complex applications operating in client-server environment and implemented completely on terminals.

Particularly, packet switched data services such as for instance general packet radio services (GPRS) available in global system for mobile communication (GSM) and implemented in state of the art mobile terminals have been introduced and standardized with regard to client-server interoperability constituted between a client mobile terminals being part of a cellular network and server devices being part of a packet switched fixed network such as the internet. Both cellular networks (or public land mobile networks PLMNs) and the fixed networks are interconnected via appropriate gateway network entities. More particularly, current GPRS implementations make use of network address translation (NAT) which is in principle a technique to translate network addresses of terminal devices in a private network being based on private address allocation into at least one public address which is applicable in a public network, such as especially the internet. Conventionally, NAT technique is usually well known in local area networks (LANs) environments connecting local terminal device via data routing network entities (i.e. for instance a router, a gateway, an access server etc.) capable for NAT with a wide area network (WAN) that is particularly the internet.

In brief summary, current implementation of packet switched networks in mobile communications is adequately adapted for data communications with fixed server devices in fixed packet switched networks for instance comprising typically browsing WAP/WEB pages, retrieving email communication and like client-server application scenarios. Nevertheless the current implementation of packet switched networks in mobile communications does not allow for direct terminal peer-to-peer data communications between two mobile terminal devices, since especially the employed NAT technique prevents initiation of direct terminal peer-to-peer connections.

Nowadays state of the art mobile terminal devices capable for mobile communications are typically capable to perform complex applications, which take advantages in data communications with other mobile terminal devices having such capabilities as stated above for data exchange. Those applications follow the conventional paradigm of fixed multi-user client-server applications. That means that such applications may be download as client applications on mobile terminal devices and when a user wishes to participate in the data exchange capability the applications connect to dedicated server entities in fixed networks, the address of which is conventionally hard-coded or soft-coded in the applications. The dedicated server entities are conventionally hosted on a network device. Once connection to a coded dedicated server entity is established, the user is allowed for communication with one or more participants also being in communication with the dedicated server entity. For this, the coded dedicated server entity usually provides a so-called server lobby area or a likewise procedure in which for instance currently present participants are listed by identifiers such as nicknames. The user is enabled to choose one or more present participants to be invited for data exchange. Be informed that participants shall be understood as users' mobile terminal devices being connected to the dedicated service device and performing client applications that correspond to the aforementioned client application or that are at least similar in function.

This introduced conventional solution following the traditional paradigm suffers in several disadvantages concerning the usability and the network environment. The usability addresses user operations and is a primary issue of such applications. Following situation shall be outlined as a way of illustration: two particular but arbitrarily selected users whish to exchange data using their mobile terminal devices provided with corresponding client applications for data exchange between each other. The particular users have to agree beforehand with a moment in time to meet on a dedicated server entity and with their identifiers to allow recognition of each other on the server entity. Misunderstandings and disagreements are nearly inevitable interdependent. Moreover, the agreement between the users is time and cost expensive.

The network environment addresses the dedicated server entity especially technical requirement thereof. When following the conventional solution, each such terminal application as stated above, requires a separate dedicated server entity set-up therefor. That means, that once a dedicated server entity is not available any more the application is simultaneously not operable any more. The bounding of applications to particular dedicated server entities is normally disadvantageous in a fast changing technical and economical environment, since operation of such dedicated server entities have to be maintained and operators of the dedicated server entities may stop services due to economical or technical reasons implying a loss of the communication function of applications requiring the dedicated server entities.

From patent application WO 2004/064337 (published after the filing date of the present invention), it is known to provide address tables in serving GPRS support nodes, SGSN, to provide a more economical routing of packet data. Mobile terminals in close proximity, controlled by the same SGSN, may be listed in these address tables. When packet data is to be transmitted to another terminal, the destination address is matched with the SGSN address table, and if a match is found, the data is transmitted directly to the correct network controller instead of the GSGN.

An object of the present invention is to provide peer-to-peer connectivity between at least two terminals in cellular networks. Especially, an object of the present invention is to provide quasi peer-to-peer connectivity via data packet switched communication services applicable for exchanging data between several mobile terminals capable for data communication via data packet switched communication services in cellular networks.

A further object of the present invention is to overcome the hitherto used agreement requirements, which have to be made between users that whish to participate in the data exchange, by a user-friendly procedure minimizing the user interaction required for.making use of the peer-to-peer connectivity.

The objects of the present invention are solved by method for network devices, terminal devices and systems to allow for quasi peer-to-peer data exchange between several mobile terminals operable cellular networks by relaying data to be communicated peer-to-peer via data relay services.

The objects of the present invention are also solved by devices, network devices, terminals, mobile terminals and systems applicable to operate the aforementioned methods according to embodiments of the invention.

Advantageously, the inventive peer-to-peer connectivity between mobile terminals in mobile networks is operable with any application operable on the mobile terminals. The inventive peer-to-peer connectivity uses a generic data relay entity which allows for exchanging arbitrary data contents and substituting the plurality of separate dedicated and specialized server entities as described above. Those skilled in the art will appreciate that the inventive concept improves the usability and the operational efforts on side of the server operators. The peer-to-peer connectivity according to the present invention implements further a semi-automatic notification mechanism including transmitting of information and configuration data relating to the peer-to-peer connectivity.

According to a first aspect of the present invention, a method for enabling quasi peer-to-peer connectivity between mobile terminals subscribed in cellular networks is provided. Data is received from one mobile terminal, which is selected or chosen out of a set of mobile terminals, which all participate in a common quasi peer-to-peer communication for exchanging data with each other. Information about destination mobile terminals is retrieved/identified. The destination mobile terminals are all mobile terminals out of the set of mobile terminals except the one mobile terminal having transmitted the data. The data is replayed/replicated such that the data can be transmitted to the destination mobile terminals on the basis of the retrieved information.

According to an embodiment of the invention, a relay session is associated with the quasi peer-to-peer communication for handing data communication between the set of mobile terminals. The relay session requires to be established first to enable the quasi peer-to-peer communication between the set of mobile terminals, which is performed by an initiating mobile terminal. The relay session forms a basic management entity for associating the mobile terminals out of the set of mobile terminals with the relay session and with the quasi peer-to-peer communication, in which the terminals out of the set of terminals participate.

According to another embodiment of the invention, the establishment of the relay session is performed by receiving a request for initiation of the relay session from the initiating mobile terminal. The request for initiation comprises at least an instruction to initiate and establish a new relay session forming the relay session. The initiating mobile terminal becomes one mobile terminal out of the set of mobile terminals with the establishment of the relay session. A response is transmitted in the relay session to the initiating terminal, which comprises at least a session identifier associated with the relay session. The relay session is identifiable by the session identifier.

According to a further embodiment of the invention, each remaining mobile terminal out of the set of mobile terminals requires joining to the relay session. The remaining mobile terminals are all mobile terminals out of the set of mobile terminals except the initiating mobile terminal having initiated the establishment of the relay session.

According to yet another embodiment of the invention, the joining of one mobile terminal is performed by receiving a request for signing-up from the mobile terminal acting as signing-up mobile terminal. The request for signing-up comprises at least the session identifier associated with the relay session. The signing-up mobile terminal is joined to the relay session identified on the basis of the session identifier. That means that the signing-up mobile terminal becomes one mobile terminal out of the set of mobile terminals such that the signing-up mobile terminal is enabled for participation in the quasi peer-to-peer communication.

According to an additional embodiment of the invention, the mobile terminals authenticate before participating in the quasi peer-to-peer communication.

According to an embodiment of the invention, the mobile terminals operate over data packet switched services for communicating said data, in particular over general packet radio service (GPRS).

According to another embodiment of the invention, the mobile terminals communicate via at least one of suitable transmission protocols comprising for instance transmission control protocol (TCP) and user datagram protocol (UDP).

According to a second aspect of the present invention, a method for allowing a mobile terminal for quasi peer-to-peer data connectivity with at least one other mobile terminal is provided. On the one hand, data which are to be communicated to the at least one other mobile terminal are transmitted to a relay entity which is responsible for passing on the data to the at least one other mobile terminal. On the other hand, data which originate from the at least one other mobile terminal are received from the relay entity having passed on the data received from the other one mobile terminal.

According to an embodiment of the invention, a relay session is required to be established on the relay entity to enable the quasi peer-to-peer communication between the mobile terminal and the at least one other mobile terminal. Therefore, the relay session is associated with the quasi peer-to-peer data communication and handles data communication between the mobile terminal and the at least one other mobile terminal.

According to another embodiment of the invention, the relay session is established on the relay entity by transmitting a request for initiation of said relay session thereto. The request for initiation comprises at least an instruction to establish a new relay session that forms said relay session after successful initiation and establishment. The mobile terminal becomes (automatically) participant in the quasi peer-to-peer data communication. A response is received from the relay entity. The response comprises at least a session identifier associated with said relay session.

According to a further embodiment of the invention, the mobile terminal may join the relay session being established by transmitting an indication to the relay entity.

According to an additional embodiment of the invention, a request for signing-up the mobile terminal is transmitted to the relay session to perform the joining of the mobile terminal. The request for signing-up comprises at least the session identifier that is associated with the relay session to which the mobile terminal wishes to join. The mobile terminal becomes (automatically) participant in the quasi peer-to-peer data communication after successful signing-up/joining.

According to yet another embodiment of the invention, the mobile terminal invites the at least one other mobile terminal to participate in the quasi peer-to-peer data communication. The invitation is performed by transmitting a request for invitation to the at least one other mobile terminal such that the at least one other mobile terminal is enabled to join to the relay session. The request for invitation comprises at least the session identifier that is associated with the relay session and required for signing-up.

According to an embodiment of the invention, the mobile terminal receives a request for invitation from the at least one other mobile terminal such that the mobile terminal is enabled to join to the relay session. The request for invitation comprises at least the session identifier that is associated with the relay session required for signing-up.

According to another embodiment of the invention, the request for invitation is communicated via a peer-to-peer communication mechanism, particularly via a peer-to-peer messaging mechanism such as short message service (SMS), smart messaging over SMS, enhanced message service (EMS), multimedia message service (MMS), peer-to-peer instant messaging services etc.

According to a further embodiment of the invention, the mobile terminal and/or said at least one other mobile terminal authenticate at the relay entity preferably before data communicating over the quasi peer-to-peer communication in which the terminals participate.

According to an additional embodiment of the invention, the mobile terminals communicate over data packet switched services for communicating the data with the relay entity. Suitable data packet switched services may be GPRS.

According to yet another embodiment of the invention, the mobile terminals communicate via at least one of suitable transmission protocols comprising for instance TCP and UDP.

According to a third aspect of the invention, a method for enabling quasi peer-to-peer data connectivity in a system is provided. The system comprises at least two mobile terminals each of which capable for communicating in a cellular network. Further, the system also comprises a relay entity. Each of the mobile terminals is further adapted to perform operations in accordance with the method for allowing a mobile terminal for quasi peer-to-peer data connectivity with at least one other mobile terminal as aforementioned. The relay entity serves for data relay services and is adapted to perform operations in accordance with the method for enabling quasi peer-to-peer connectivity between mobile terminals subscribed in cellular networks as aforementioned.

According to a fourth aspect of the invention, a computer program and a computer program product for executing a method for enabling quasi peer-to-peer connectivity between at least two mobile terminals in cellular communication networks is provided, respectively. The computer program product comprises program code sections for carrying out the steps of the method of an aforementioned embodiment of the invention, when the program is run on a computer, a terminal, a network device, a mobile terminal, a mobile communication enabled terminal or an application specific integrated circuit. Alternatively, an application specific integrated circuit (ASIC) may implement one or more instructions that are adapted to realize the aforementioned steps of the method of an aforementioned embodiment of the invention, i.e. equivalent with the aforementioned computer program product.

According to a fifth aspect of the invention, a computer program product is provided, which comprises program code sections stored on a machine-readable medium for carrying out the steps of the method of an aforementioned embodiment of the invention, when the computer program product is run on a computer, a terminal, a network device, a mobile terminal, or a mobile communication enabled terminal.

According to a sixth aspect of the invention, a computer data signal embodied in a carrier wave and representing instructions is provided which when executed by a processor cause the steps of the method of an aforementioned embodiment of the invention to be carried out.

According to a seventh aspect of the invention, a relay entity for enabling quasi peer-to-peer connectivity between mobile terminals in cellular communication networks is provided. The relay entity comprises at least a network interface, a protocol handler module and a redirector module. The network interface is adapted for receiving requests and data associated with a quasi peer-to-peer communication and for transmitting responses and said data associated with said quasi peer-to-peer communication. The protocol handler module is adapted to handle and/or manage requests received from the mobile terminals. The requests comprises at least requests for initiating a relay session, requests for signing-up a mobile terminal to the relay session. The redirector module is adapted to handle and manage the data associated with the quasi peer-to-peer communication on the basis of the relay session that is associated with a quasi peer-to-peer communication. The data received from one mobile terminal are transmitted to all remaining ones of said mobile terminals with exception of that one mobile terminal from which the data have been received. This operation may be denoted as passing on of the data and may require a buffering of the data in a suitable buffer storage and a replaying/replicating of the data for transmission to the remaining mobile terminals. The redirector module may be configured by the protocol handler module in accordance with the requests handled thereby.

According to an eighth aspect of the invention, a mobile terminal enabled for quasi peer-to-peer connectivity in a cellular communication network with at least one other mobile terminal is provided. The mobile terminal comprises at least a cellular communication interface and a peer-to-peer communication module interfacing between said cellular communication interface (40, 52) and at least one application.

On the one hand, the cellular communication interface (40, 52) is adapted to transmit requests and data to be communicated to the at least one other mobile terminal by transmitting the data to a relay entity. On the other hand, the cellular communication interface (40, 52) is adapted to receive data originating from the at least one other mobile terminal by receiving the data from the relay entity. The requests comprise at least requests for initiating a relay session, requests for signing-up a mobile terminal to the relay session. The data are associated with a quasi peer-to-peer communication established between the mobile terminal and the at least one other mobile terminal. The peer-to-peer communication module is adapted to generate and transmit the requests to the relay entity, to supply the data provided by the at least one application to be transmitted to the one other mobile terminal to the cellular communication interface; and to supply the data originating from the at least one other mobile terminal and provided by the communication interface to the at least one application.

According to an embodiment of the invention, the mobile terminal comprises also a dispatcher module, which is adapted to parse messages received via a peer-to-peer communication mechanism. The dispatcher module determines whether a received message is a request for invitation. In case this applies, parsing results are supplied to the at least one application such that the at least one application is enabled to use a quasi peer-to-peer communication in which the mobile terminal can participate on the basis of the request for invitation.

According to another embodiment of the invention, the mobile terminal comprises additionally a dispatcher database, which is dedicated to register applications operable with the mobile terminal. The dispatcher database stores information relating to associations of application identifiers with applications. The application identifiers are employed to identify applications, which may be addressed by said request for invitation.

According to a ninth aspect of the invention, a system for enabling quasi peer-to-peer connectivity is provided, wherein the system comprises at least two mobile terminals and a relay entity. Each of the mobile terminals is capable for communicating in a cellular network and corresponds to a mobile terminal enabled for quasi peer-to-peer connectivity in a cellular communication network with at least one other mobile terminal as aforementioned. The relay entity serves for data relay services and corresponds to a relay entity for enabling quasi peer-to-peer connectivity between mobile terminals in cellular communication networks as aforementioned.

The accompanying drawings are included to provide a further understanding of the invention and are incorporated in and constitute a part of this specification. The drawings illustrate embodiments of the invention, and together with the description, serve to explain the principles of the invention. In the drawings,
- Fig. 1: schematically shows a block diagram of a system allowing for quasi peer-to-peer connectivity between two mobile terminals according to an embodiment of the present invention;
- Fig. 2a: schematically shows a first sequence diagram illustrating operations of devices in the system allowing for quasi peer-to-peer connectivity according to an embodiment of the present invention;
- Fig. 2b: schematically shows a second sequence diagram illustrating operations of devices in the system allowing for quasi peer-to-peer connectivity according to an embodiment of the present invention;
- Fig. 2c: schematically shows an alternative second sequence diagram illustrating operations of devices in the system allowing for quasi peer-to-peer connectivity according to an embodiment of the present invention;
- Fig. 3a: schematically shows a block diagram of components comprised in a network device serving data relay services according to an embodiment of the present invention;
- Fig. 3b: schematically shows a block diagram of components comprised in a mobile terminal according to an embodiment of the present invention;
- Fig. 3c: schematically shows a block diagram of components comprised in a mobile terminal according to an embodiment of the present invention; and
- Fig. 4: shows a schematic example structure of an invitation request according to an embodiment of the present invention.

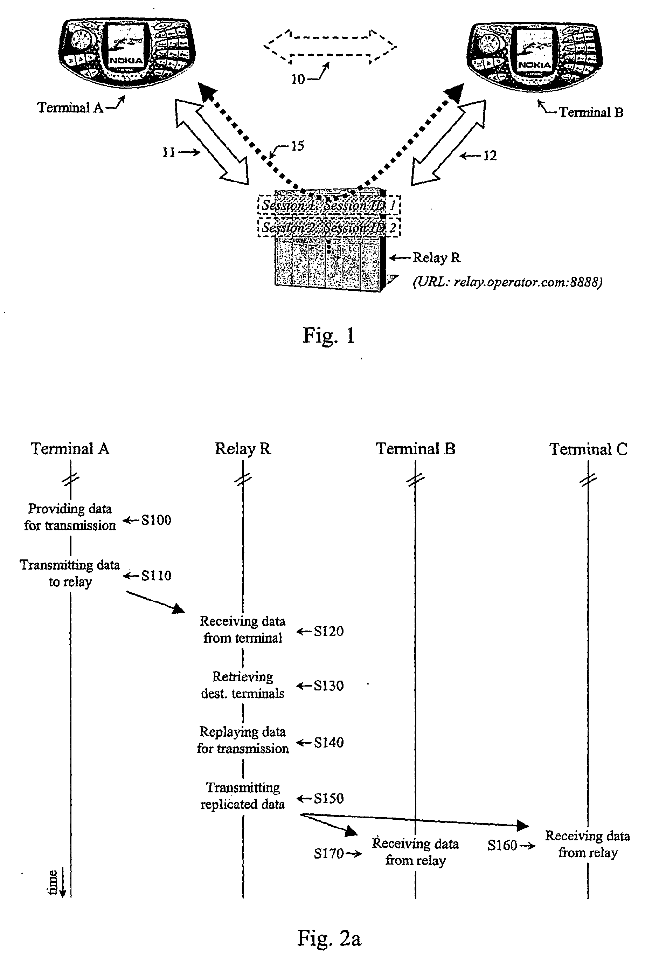

A brief introduction into the inventive concept will be given with reference to Fig. 1, which shows a schematic architecture of a system allowing for quasi peer-to-peer connectivity between mobile terminals. The depicted system architecture is based on a selection of essential network devices and entities participating in the peer-to-peer data communication as proposed by the inventive concept.

Referring to Fig. 1 the system according to an embodiment of the invention comprises terminals A, B and relay R. The quasi peer-to-peer connectivity according to the present invention shall be represented by a quasi peer-to-peer communication connection 10 established between terminal A and terminal B allowing for data communication therebetween.

Terminal A as well as terminal B shall represent illustratively any kind/type of mobile terminals, which are operable with cellular networks and which are capable for wireless data communication. Such terminals may be mobile phones, communicators, personal digital assistants (PDAs), organizers, mobile computers or any consumer electronics (CE) having the aforementioned capabilities. Particularly, terminals A and B may support data packet switched services, which are available in several public land mobile networks (PLMNs) (e.g. GPRS in GSM). Moreover, the quasi peer-to-peer connectivity according to the present invention is depicted illustratively as the quasi peer-to-peer communication connection 10 between two terminals, namely terminal A and terminal B. It shall be understood that both terminal A and terminal B shall represent an arbitrary number of terminals participating in the peer-to-peer communication connection 10. The quasi peer-to-peer connectivity according to the present invention allows for establishing a quasi peer-to-peer communication environment between a set of terminals comprising an arbitrary number of terminals. Arbitrary data contents conveyed by one of the terminals in such a quasi peer-to-peer communication environment are transmitted to all remaining terminals of the environment.

The present invention should neither be limited to a certain embodiment of a terminal nor to a certain number of terminals participating in a quasi peer-to-peer communication connection on the basis of the inventive quasi peer-to-peer connectivity. The quasi peer-to-peer communication connection 10 can also be established between three or more terminals, which will be apparent when reading the description referring to the following drawings. In order to improve the readability of the description, the term "quasi peer-to-peer" will be abbreviated as "q-p2p".

Referring back to Fig. 1, the q-p2p connectivity between terminal A and terminal B allows terminal A and terminal B to communicate arbitrary data, contents, signals, information and the like between them, preferably in form of data packets on the basis of data packet switched services for communication in cellular networks. As explained above, direct connectivity between terminals employing data packet switched services is not supported in today's PLMNs. In order to overcome this restriction and nevertheless to allow data packet switched services for data communication in a peer-to-peer terminal end-to-end manner between at least two terminals in cellular networks, the relay R is introduced into the data communication flow. The relay R is a network service and functional network entity, respectively, which serves as data relay services operating switching, relaying and mediating of arbitrary data, respectively. That means that relay R may be a generic server application entity hosted on any arbitrary network server device interposed in the communication path between the terminals participating in the data relay service. Relay R may be part of the fixed network inside a public land mobile network (PLMN) or may be connected to the public land mobile network (PLMN) e.g. via the internet. The terminals A and B connect to relay R communicate wireless via one or more cellular networks to relay R, wherein access points in the cellular networks serve to switch data traffic between cellular networks and relay R connected to the fixed network.

The relay R receives for instance on the one hand data packets of arbitrary data contents from terminal A, replicates or replays the received data packets to transmit the data packets to all other terminals being participants of the q-p2p communication connection 10, herein to terminal B. Therefore, a data communication connection 11 is established between terminal A and relay R and a data communication connection 12 is established between relay R and terminal B. Further, the relay R receives for instance on the other hand data packet of arbitrary data contents from terminal B, replicates or replays the received data packets to transmit the data packets to all other terminals being participants of the q-p2p communication connection 10, herein to terminal A. Correspondingly, the data communication connection 11 and the data communication connection 12 serves for data communication in turn, respectively. Therefore, the data communication connection 11 as well as the data communication connection 12 may be adapted to support packet switched services for data communication.

The relay R is responsible for transmitting received data to those terminals only, to which the data are intended, i.e. those terminals, which participate in the q-p2p communication connection 10 with exception of the data transmitting terminal, from which the data originates. Prerequisites or pre-condition have to be made on side of the relay R to ensure the operation according to the inventive concept. Prerequisites or pre-conditions are issues that will be discussed below.

The operation of the relay R is described now in detail with reference to Fig. 2a. It shall be assumed that the inventive q-p2p connectivity is employed to establish a q-p2p communication connection between terminal A, terminal B, and terminal C. Further it shall be also assumed that terminal A provides data for peer-to-peer transmission to both terminals B and C. Those skilled in the art will appreciate that data provided by any terminal of the terminals participating in the q-p2p communication connection illustrated in Fig. 2a are handled in an equal or at least similar way. The invention is not limited to the operation of relay R described with respect to Fig. 2a depicting operational steps of relay R in an illustrative way.

Fig. 2a illustrates a sequence diagram that comprises operations of terminal A, relay R, terminal B and terminal C in a time sequence. The depicted operations that will be described in detail below are example operations, which allow for implementation of an embodiment of the present invention. Other operations and other arrangements in time of the operations may result in same overall functionality of the relay R serving for q-p2p connectivity.

In an operation S100, terminal A provides data for being transmitted to terminal B and C. The data have arbitrary contents. The data may be provided by any application performed on terminal A. The invention shall not be limited to any certain data, data contents or application providing the data for transmission.

In an operation S 110, the provided data is transmitted from terminal A to the relay R with the intention to be passed on to terminals B and C. Terminal A, terminal B and terminal C participate in a common q-p2p communication connection established therebetween. The transmission of the data may be performed by a data packet switched service which is operable with the data communication connection to relay R. Moreover, an adequate transmission protocol is employed for the data communication with relay R such as transmission control protocol (TCP), user datagram protocol (UDP) or any applicable connection-oriented bearer protocol.

In an operation S120, relay R receives the data from terminal A. The received data may be buffered by relay R before passing on to the terminals B and C, to which the received data are intended. The receiving relay R is capable to identify the sender/originator of the received data, i.e. herein terminal A as data sender/originator. The identification may be based on a corresponding identifier of terminal A received in conjunction with data for example coded in the header of the transfer protocol employed for data transmission from terminal A to relay R.

Relay R runs one or more relay sessions to manage its data relay service, which enables the inventive q-p2p connectivity between mobile terminals. Each session is associated with one determined q-p2p data communication connection as described above, which is associated with several terminals participating in the q-p2p data communication connection, i.e. herein terminals A, B and C. In particular, relay R is able to identify on the basis of a relay session those terminals, which participate in a q-p2p data communication connection. In turn this implies that a corresponding relay session is identifiable in accordance with information about one participating terminal, which may be the identifier of the data sender/originator.

In an operation S130, relay R retrieves information about destination terminals to which the received data have to be passed on. Relay R identifies the relay session in which the terminal A participates and on the basis of knowledge about the relay session the information about the participating terminals, especially address information about the participating terminals, are retrieved. With reference to Fig. 2a, the remaining participating terminals are identified as terminals B and C.

In an operation S140, relay R replicates or replays the received data for transmission to the terminals participating in the quasi peer-to-peer connectivity, herein terminals A, B and C. As a result relay R transmits in an operation S150 the data to terminals B and C, which have been identified by relay R as remaining and intended terminals in the operation S130 participating in the q-p2p data communication connection and corresponding relay session, respectively.

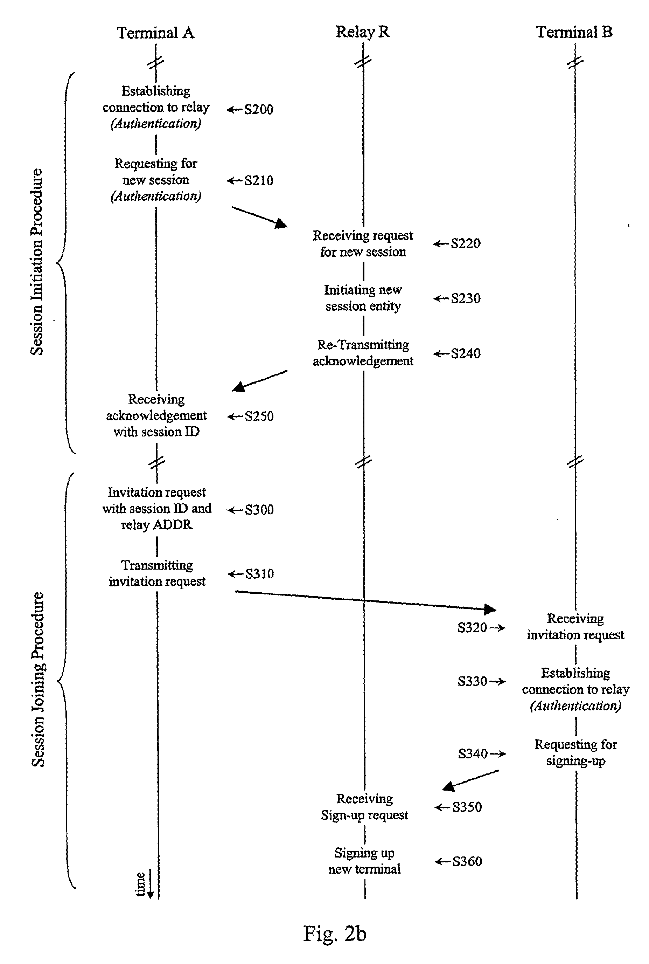

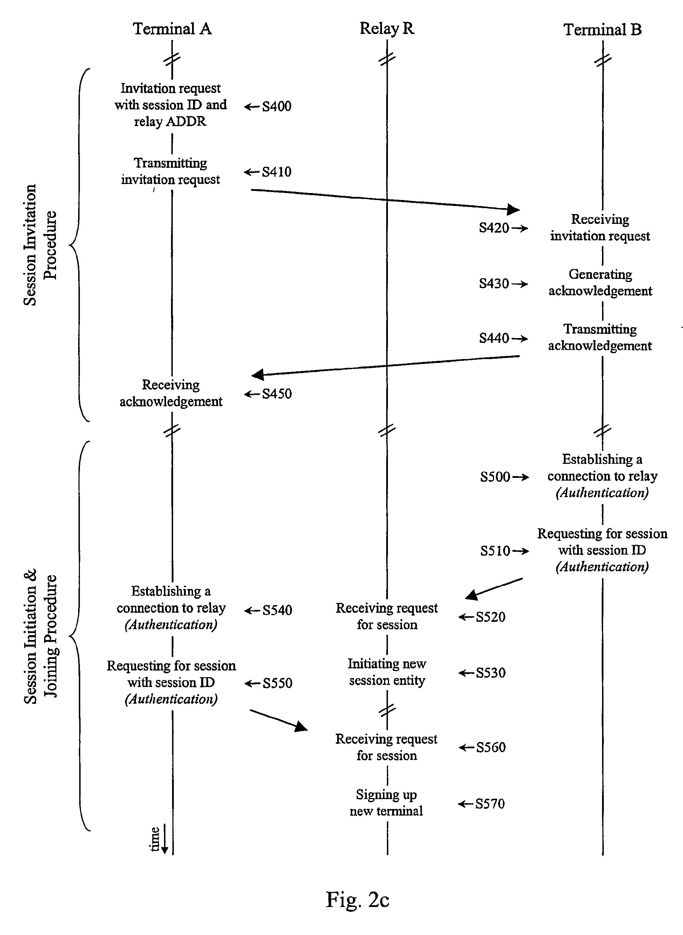

The establishment of a relay session, which enables relay R to provide data relay services according to an embodiment of the present invention, and the participation of terminals in such a relay session will be described in the following Fig. 2b and 2c in detail.

Fig. 2b illustrates a sequence diagram that comprises operations of terminal A, relay R and terminal B in a time sequence. A first set of operations relate to an initiation of a relay session by terminal A, whereas a second set of operations relate to a participation of terminal B in the relay session establish on initiation by terminal A. Those skilled in the art will appreciate that the initiation of a relay session is applicable with any other terminal operable with the inventive q-p2p connectivity and the participation of terminal B is applicable with any terminal participating additionally in any established relay session.

In an operation S200, a q-p2p communication connection of the basis of the inventive q-p2p connectivity is intended between several terminals, i.e. herein terminals A and B in a way of illustration. Assume that an initiating terminal, herein terminal A, establishes a communication connection to a relay serving the required data relay service, herein relay R.

As aforementioned, the connection between terminal A and relay R is switched via the cellular network and public land mobile network (PLMN), respectively, into which terminal A is subscribed. Different data transfer mechanism and data transmission protocols may be employed for data communication between terminals in a cellular network and a relay entity. Terminals as well as the relay entity have to support adequately the chosen transport mechanism and the chosen transmission protocol. The present invention shall neither be limited to any particular data transfer mechanism nor to any distinct data transmission protocol since a broad number of both transport mechanisms and transmission protocols are available in the enlightened network environment for data communication. For instance, the data transfer mechanism may be an unreliable packet-based transport mechanism or a reliable stream-based transport mechanism and the transmission protocol may support encryption or may be transparent to intermediate network nodes.

It shall be assumed that terminal A is informed about an address information of relay R, on the basis of which the communication connection can be established. For instance such an address information may be provided to users of terminals wishing to use the data relay service via a WEB or WAP page, as an over-the-air service message or by any suitable informational way.

The establishing of the data communication connection between terminal A and relay R may comprise an authentication of terminal A at relay R. Such an authentication of terminals using the data relay service is useful to limit the number of users to a predetermined selection of users, to realize a commercial data relay service or to realize a reliable and secure communication flow between terminals and relay.

The established communication connection between terminal A and relay R results in a communication channel between both parties, upon which data communication between both is performable and which will be employed for data transmissions described with reference to following operations.

In an operation S210, terminal A transmits an initiation request to relay R to indicate thereto to initiate and establish a new relay session for relaying data. The initiation request is transmitted via the communication connection and communication channel, respectively, established between terminal A and relay R in the operation S200 performed before.

In an operation S220, relay R receives the initiation request for a new relay session from terminal A and correspondingly initiates in an operation S230 a new relay session by allocating a new relay session entity and a session identifier (or session token) within its memory. The session identifier may be associated uniquely to this new relay session. As stated above, each relay session identified by a session identifier manages data communication between terminals participating in a q-p2p communication connection designated comprehensively as data relay service. For ensuring an unambiguous session identifier the session identifier may be defined cryptographically a random value, a global user identifier (GUID) or a hash based value on the basis of an identification of the initiating terminal.

After successful initiation and establishment of the new relay session relay R retransmits in an operation S240 an acknowledgement to the session initiating terminal, i.e. terminal A. The acknowledgement may comprise information about the successful establishment and the session identifier associated to the new relay session for identification purpose of the new relay session.

In an operation S250, terminal A receives the acknowledgement, which comprise aforementioned information, in particular information about the relay session and more particular the session identifier associated to the new relay session.

In this state, the new relay session is established and in principle q-p2p connectivity and data relay service between terminals is now available, respectively. The initiating terminal, herein terminal A, maintains the established communication connection and communication channel, respectively, for data transmissions dedicated to the q-p2p communication connection. Since the relay session has been established by the terminal A and terminal A is identifiable by the relay R as being participant of this established relay session, further data transmissions received by relay R from terminal A will be assumed by relay R as data transmissions to be passed on to further terminals participating in the relay session.

Nevertheless, only the initiating terminal, herein terminal A, is participating in the new relay session established up to now. At least one further terminal has to participate in the new relay session to make use of the advantages of this relay session. This issue, i.e. the joining of one or more terminals in this relay session, will be described with reference to the following operations according to an embodiment of the invention.

In an operation S300, the terminal A generates an invitation request in order to invite one or more further terminals to join or participate in the relay session established beforehand. The one or more further terminals need to be informed about the relay R and the particular relay session to be used for participating in the q-p2p connectivity. Accordingly, the invitation request comprises information about the relay entity serving the data relay service, in particular an address information about the relay R, and information about the established relay session, in particular the session identifier associated with the established relay session and enabling identification of the established relay session.

In an operation S310, the generated invitation request is transmitted to the intended further terminals. The transmission of the invitation request is preferably operated by an available terminal peer-to-peer communication mechanism provided by the cellular network(s). Current cellular networks provide a number of messaging services, for instance short message service (SMS), smart messaging (SM) being based on SMS, enhanced message service (EMS), multimedia message service (MMS) and instant messaging, but any available peer-to-peer bearer channel could be used since in principle the amount of data of such an invitation message is small. It shall be noted that both the transmitting terminal as well as the receiving terminals have to support adequately the selected peer-to-peer communication mechanism.

The embodiment shown in Fig. 2b illustrates terminal B as intended terminal to be invited for participating in a q-p2p communication connection. Terminal B should be understood as representing an arbitrary number of terminals, which operate similarly and which may participate in parallel in the one q-p2p communication connection in question.

In an operation S320, terminal B receives the invitation request. Terminal B recognizes the invitation request as a request whether to join in the q-p2p communication connection with terminal A or not. The invitation request may comprise all information which terminal B requires to contact the relay R and to join the relay session established by terminal A.

In an operation S330, terminal B has decided to join and establishes a communication connection to relay R. Notations, explanations and remarks given above with reference to operation S200 relating to communication connection, communication channel, transfer mechanism, transmission protocol and authentication with respect to the communication between terminal A and relay R apply in the same way to the communication between terminal B and relay R. Address information relating to relay R and required to establish a communication connection between terminal B and the relay R designated by terminal A may be contained in the invitation request.

In an operation S340, terminal B generates a participating, signing-up or joining request in order to become a participant in the relay session established by terminal A. The joining request at least comprises information about the relay session to which terminal B shall be signed-up, in particular the session identifier which allows for identifying the correct relay session and which may be contained in the invitation request received before from terminal A.

In an operation S350, relay R receives the aforementioned joining request from terminal B and, in an operation S360, on the basis of the received information relay R is able to sign-up terminal B to the relay session established by terminal A beforehand. With the signing-up of terminal B by relay R in the relay session established by terminal A, the q-p2p communication connection between terminal A and terminal B relayed by the data relay service of relay R is established.

After joining of terminal B in the relay session, relay R may transmit an acknowledgment to terminal B and/or terminal A informing terminal B about the successful joining and informing terminal A about the participation of terminal B in the q-p2p communication connection, respectively.

In this state, the q-p2p communication connection between terminal A and terminal B is available and applicable. The joining terminal, herein terminal B, maintains the established communication connection and communication channel to relay R, respectively, for data transmissions dedicated for the q-p2p communication connection. Since terminal B is now participant of the relay session established by the terminal A and terminal B is identifiable by the relay R as being participant of this relay session, further data transmissions received by relay R from terminal B will be assumed by relay R as data transmissions to be passed on to the terminals participating in the relay session, herein terminal A. Therefore, further data communications are operated as described in detail with reference to Fig. 2a.

It shall be noted that the q-p2p communication connection described above is not limited to two participating terminals. On the contrary, further terminals may participate in the q-p2p communication connection. Further terminals may be invited by terminal A or terminal B in a way analogous to that purposed above. Since terminal B is in knowledge about relay and relay session, terminal B is also able to invite further terminals to participate therein.

In case a terminal intends to leave its participation in a q-p2p communication connection, i.e. to cancel the q-p2p communication with the further participating terminals, the terminal may simply cancel the communication connection to the relay entity and may disconnect from the relay entity, respectively. Before leaving the terminal may inform the further participating terminals thereabout. Terminals remaining in the q-p2p communication connection may recognize by time out that a terminal has left the participation, since data communication thereto is not possible any more. The relay entity removes a terminal that has left the q-p2p communication from the relay session. That means that in case all (but one) participating terminals have left the relay session, the relay entity discards completely the corresponding relay session and reclaims the resources of the discarded relay session.

Fig. 2c illustrates an alternative sequence diagram that comprises operations of terminal A, relay R and terminal B in a time sequence. A first set of operations relate to an invitation of one or more terminals to participate in a q-p2p connectivity, whereas a second set of operations relate to an initiation of a relay session required for q-p2p connectivity and signing-up the participating terminals in the relay session establish on initiation.

Referring back to Fig. 2b, the operational sequences according to an embodiment of the present invention first comprise an initiation of a relay session by an initiating terminal at a relay entity and afterwards inviting of one or more terminal to participate therein. In contrast thereto, Fig. 2c illustrates operational sequences according to an embodiment of the present invention, in which first terminals are invited by one terminal to participate and afterwards communication to the relay entity is established. That means that a relay session may only initiated and established on the relay entity when the invitation was successful and the relay session is required.

It shall be noted that notations, explanations and remarks given above with reference to Fig. 2b relating to communication connection, communication channel, transfer mechanism, transmission protocol, authentication and peer-to-peer message communication apply in the same way to the following description.

In an operation S400, a first terminal, herein terminal A, generates an invitation request. The invitation request comprises information about a relay session to be established, especially a pre-defined q-p2p communication identifier, and may include information about a relay entity serving data relay services, in particular address information of the relay entity, herein relay R.

The q-p2p identifier is required such that the terminals which wish to participate in a common relay session, i.e. in a common q-p2p communication connection, are identifiable later as such by the relay R serving the data relay service. The first inviting terminal should be adapted to generate a q-p2p identifier, i.e. for example unambiguous or unique with reference to q-p2p identifiers employed in conjunction with the one relay entity which is to be employ for data relay services allowing for q-p2p connectivity. The q-p2p identifier may be based on any identifier associated with the terminal, which may guarantee for generation of a unique identifier. In principle, the q-p2p identifier is comparable with session identifier as such described above. Both identifiers are used for joining, signing-up or participating in a relay session. Therefore, the wording session identifier will substitute for the term q-p2p identifier in the following description.

In an operation S410, terminal A transmits the invitation request to one or more further terminals, which are intended to participate in an aspired q-p2p communication connection. Herein terminal A transmits such an invitation request to terminal B for the way of illustration. The invitation request is transmitted via a peer-to-peer communication mechanism to the one or more further terminals.

In an operation S420, terminal B receives the invitation request and generates in an operation S430 an acknowledgement whether terminal B participates or not. The generated acknowledgement is retransmitted to the inviting terminal, i.e. terminal A.

In an operation S450, the inviting terminal, herein terminal A, collects the acknowledgements received from each terminal invited before to participate in the q-p2p connectivity. Terminal A is able to check whether at least one of the previously invited terminals has agreed in participation such that terminal A is informed whether establishing a communication connection to relay R is necessary.

It shall be assumed that terminal B has agreed in the participation in a q-p2p communication connection with inviting terminal A. Accordingly, terminal A as well as terminal B will establish communication connections to relay R. The establishing of the communication connections between terminal A and relay R as well as between terminal B and relay R is performed independently from each other. That means that either terminal A or terminal B is the first terminal having established the communication connection to relay R. Without limiting the invention, it shall be assumed that terminal B establishes the communication connection to relay R at first. It will be apparent to those skilled in the art that the sequence of establishing the communication connection by terminals A and B is arbitrary and may be exchanged.

In an operation S500, terminal B establishes a communication connection to relay R. Information about the relay entity required for establishing the communication connection to relay R, particularly address information about the relay R, are part of the invitation request received beforehand and hence terminal B is informed about the required information relating to relay R. The establishment may comprise an authentication of terminal B at relay R.

In an operation S510, terminal B requests for a relay session with a pre-defined session identifier at relay R. The pre-defined session identifier corresponds to the aforementioned session identifier and q-p2p identifier, respectively, contained in the invitation request.

In an operation S520, relay R receives the request for a relay session associated with the pre-defined session identifier. On receiving such a request, relay R checks whether a relay session associated with this pre-defined session identifier exists. Since terminal B is assumed to be the first terminal that contacts relay R, there is no relay session present associated with this pre-defined session identifier. Relay R interprets the request as an initiation request and successes accordingly.

In an operation S530, relay R initiates and establishes a new relay session associated with the pre-defined session identifier provided by request received from terminal B. The initiation and establishing may be operated analogously to the operation S230.

In this state, the new relay session is established and principally the q-p2p connectivity between terminals is now available. The terminal B maintains the established communication connection and communication channel, respectively, for data transmissions dedicated for the q-p2p communication connection.

In operations S540 and S550, terminal A establishes a communication connection to relay R and requests for a relay session with the pre-defined session identifier at relay R. These operations S540 and S550 are performed by terminal A in analogy to the operations S500 and S510 performed by terminal B.

In an operation S560, relay R receives the request for a relay session associated with the pre-defined session identifier. On receiving such a request, relay R checks again whether a relay session associated with this pre-defined session identifier exists. Since the relay session with the pre-defined session identifier has been established before the request of terminal B, relay R interprets the request as a signing-up request to sign-up terminal A to the existing relay session identified by the pre-defined session identifier and successes accordingly.

In an operation S570, on the basis of the received information comprised in the previously received request, relay R signs-up terminal A to the identified and existing relay session. With the signing-up of terminal A by relay R in the relay session, the q-p2p communication connection between terminal A and terminal B relayed by data relay service of relay R is established.

After joining of terminal A in the relay session, relay R may transmit an acknowledgment to terminal B and/or terminal A informing terminal A about the successful operation and informing terminal B about the participation of terminal A in the q-p2p communication connection, respectively.

In this state, the q-p2p communication connection between terminal A and terminal B is available and applicable. The terminal A maintains the established communication connection and communication channel, respectively, for data transmissions dedicated for the q-p2p communication connection.

In the following sections a protocol framework for communication between terminals and relay entity will be described. The presented protocol framework forms an embodiment of the present invention, which shall contribute to the clarity of the present invention. Several further protocol implementations are also applicable. The present invention is not limited to any particular protocol framework and distinct implementations, respectively.

The following protocol framework shall be based on a connection-oriented bearer protocol, such as transmission control protocol (TCP), user datagram protocol (UDP), etc. For relay session initiation an initiating terminal establishes a communication connection to relay R. Once the establishment is successfully completed, a data communication channel is available therebetween, which allows for exchange of information.

A first set of three example protocol messages relate to the requesting of a new relay session on a relay entity by an initiating terminal and responses of the relay entity to the initiating terminal concerning acknowledgements whether the request was successful or not. The example protocol message for requesting a new relay session may be formed as a simple and text-based relay access protocol (RAP):
RAP-Version: 1.0
Command: NEW_SESSION
Client-Certificate: fui303t12h239g238hg923hg239g23gh234h=
Signature: fj23jg23g95h2343hh823g=
.

The first line indicates an information about the protocol used and version information about the used protocol. The second line includes a command instructing the relay entity to initiate and establish a new relay session. The third and fourth lines comprise optional authentication and signature information, which allow an authentication of the requesting terminal at the relay entity. Alternatively, authentication may also be achieved by employing an adequately adapted transmission protocol such as transport layer security (TLS). With exception of the first line, the order of the lines may be arbitrary. The final period may be used in a stream-based data channel to indicate end of the protocol message, other data channel techniques may require different end indicators.

The request for establishing a new relay session is either successful or unsuccessful. Accordingly, the requested relay entity may retransmit information about the success in form of a positive and negative response message.

An example protocol message of the positive response is shown in the following:
RAP-Version: 1.0
Command: NEW_SESSION_OK
Session-Token: kf9grjgawe32yj39dm3d
.

The positive response informs the requesting terminal about a successful establishment of a new relay session (line 2) and provides additionally information about the new relay session, especially the session identifier, denoted in line 3 as session-token. After a terminal receives the positive protocol message ("NEW_SESSION_OK") it should be deduced that the relay session is now active. Any further traffic sent by the initiating terminal over the communication connection to the relay entity will not be handled by the relay entity but delivered transparently to the other terminal participating in the relay session. There may be no way to communicate with the relay entity itself any more.

An example protocol message of the negative response is shown in the following:
RAP-Version: 1.0
Command: NEW_SESSION_FAILED
Reason: Authentication failure
.

The negative response comprises in line 2 an acknowledgement that informs the receiving terminal that the requested new session has not been established. The reason because of which the establishment of the new session has been denied by the relay entity is coded in lines 3 in form of an example clear text notification. After the terminal receives the negative protocol message ("NEW_SESSION_FAILED") the communication connection to the relay entity is canceled.

A second set of three example protocol messages relate to the requesting for joining or participating in an established relay session on a relay entity by a terminal wishing to participate and responses of the relay entity to the terminal concerning acknowledgements whether the request was successful or unsuccessful. The example protocol message for requesting to participate in a relay session may be formed as a simple and text-based relay access protocol (RAP):
RAP-Version: 1.0
Command: JOIN_SESSION
Session-Token: kf9grjgawe32yj39dm3d
Client-Certificate: frif3j93jgwgmgjj29j2198hg9nansfeafaf=
Signature: j988g923hfhsnvnve73jdjke82j=
.

In turn, the first line indicates an information about the protocol used and version information about the used protocol. The second line includes a command instructing the relay entity that the requesting terminal wishes to participate and join in a relay session, respectively, which is identified in the third line that comprises the session identifier and session-token, respectively, associated with the relay session in question. The fourth and fifth lines comprise optional authentication and signature information, which allow an authentication of the requesting terminal at the relay.

The request for participating in a relay session is either successful or unsuccessful. Accordingly, the requested relay may retransmit information about the success in form of a positive and negative response.

An example protocol message of the positive response is shown in the following:
RAP-Version: 1.0
Command: JOIN_SESSION_OK
.

The positive response informs the requesting terminal about a successful participating in the requested relay session (line 2). After the invited terminal receives the positive protocol message ("JOIN_SESSION_OK") it shall be noted that the relay session is active in view of the invited terminal and the invited terminal has to prepare for receiving data on the q-p2p communication connection.

An example protocol message of the negative response is shown in the following:
RAP-Version: 1.0
Command: JOIN_SESSION_FAILED
Reason: Session has timed out.
.

The negative response comprises in line 2 an acknowledgement that informs the receiving terminal that the requested participation in a relay session failed. The reason because of which the participation in the relay session has been unsuccessful is coded in lines 3 in form of an example clear text notification. In consequence on such a negative protocol message ("JOIN_SESSION_FAILED") the invited terminal may cancel the communication connection to the relay entity.

The following drawings are dedicated to components, architecture and structure thereof within a relay entity and terminals according to embodiments of the present invention.

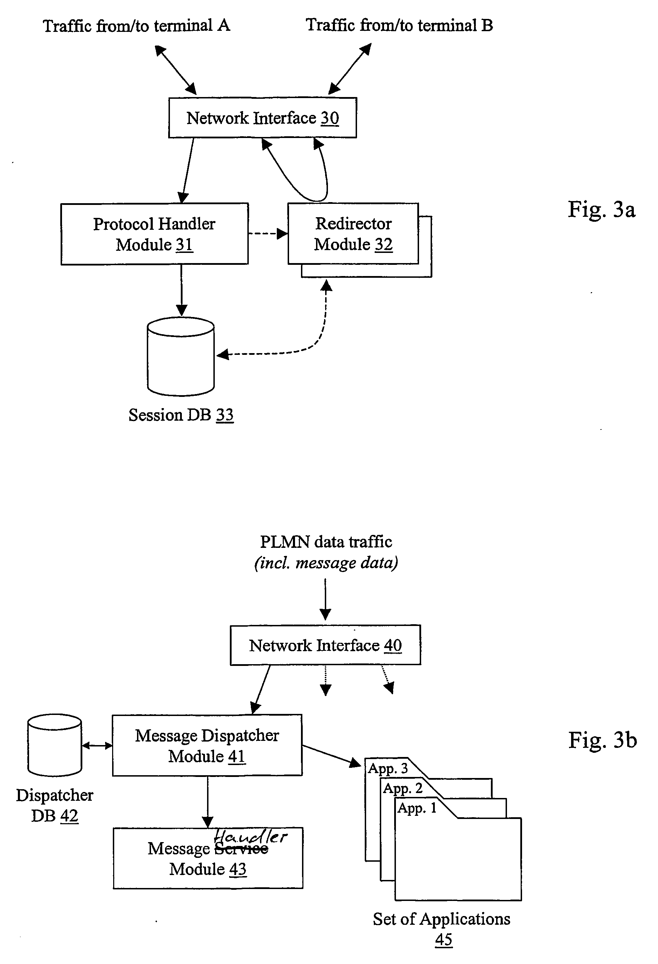

Fig. 3a schematically shows a block diagram of components comprised in a relay entity according to an embodiment of the present invention. A relay entity implementation may be based on the components illustrated in Fig. 3a such that the relay entity is operable with data relay services according to an embodiment of the present invention.

The relay entity and relay instance, respectively, offering data relay services according to an embodiment of the present invention may be implemented on any network device/host, particularly any device/host connected to a packet switched network. The relay entity/instance may be implemented on the network device/host on the basis of software components and/or hardware components. Moreover, one or more independent relay entities and relay instances, respectively, may be hosted by one dedicated single network device/host which may allow for traffic load balancing or which may allow for assignment different relay entities/instances with pre-defined utilization requirements.

In detail, a relay entity may be composed illustratively of structural components, which are depicted in the block diagram of Fig. 3a. The structural components include a network interface 30, a protocol handler module 31, a session database 33 and one or more instances of a redirector module 32.

The network interface 30 is adapted on the one side to receiving incoming protocol messages and data traffic to be relayed from one terminal participating in accordance with the q-p2p connectivity and on the other side to transmit outgoing protocol (response) messages and relayed data traffic to the one or more other terminals also participating in the q-p2p connectivity. The incoming protocol messages, which comprises requests for initiating a new relay session and request for participating in an established relay session, are handled by the protocol handler module 31. The protocol handler module 31 is further adapted to respond to the incoming protocol messages accordingly. An embodiment of the protocol message framework is described in detail above. The protocol handler module 31 configures the session database 33, which stores information about relay sessions, in particular information about session identifiers associated with relay sessions and information about terminals participating in relay sessions for data relay services. Moreover, the protocol handles module 31 may create and configure an instance of a redirector module 32, which may be fixly associated to one determined relay session. The instance of the redirector module 32 associated to a determined relay session is bound to the data traffic flow of each participating terminal. An instance of the redirector module 32 is such configured when a relay session is initiated/established and when a terminal requests to participate.

An instance of the redirector module 32 handles data traffic flows originating from terminals, which participate in a q-p2p communication connection. Therefore, the instance of the redirector module 32 is configured such that data traffic flows from terminals participating in a relay session (in a quasi peer-to-peer connectivity) are bound to the corresponding instance of the redirector module 32. That means, data traffic incoming from a terminal identified as a terminal participating in a certain established relay session is (automatically) replicated/replay by the instance of the redirector module 32 and (automatically) transmitted to the remaining terminals participating in the certain relay session identified on the basis of the terminal from which the data traffic originates. The identification of the relay session on the basis of information about the terminal from which the data traffic originates may require access to the session database 33 providing the required information for operating data relay services.

Alternatively, the implementation of a relay entity/instance may comprise one redirector module 32 responsible for all relay sessions and all q-p2p communication connections.

The termination of a participation of a terminal in a q-p2p communication may be effected by the participating terminal by disconnecting from the relay entity serving data relay services. The instance of the redirector module 32 maintains always the data relay service. In case the terminal disconnects, the instance of the redirector module 32 recognizes the termination of the participation and discards the bounding of the data traffic of this terminal such that data traffic is not replayed/replicated to this terminal any more. In case that there only one or none participating terminal present in a q-p2p communication connection, i.e. in a relay session, the instance of the redirector module 32 indicates to the protocol handler module 31 to discard the relay session completely from the relay entity/instance comprising the corresponding instance of the redirector module 32 and information about the relay session stored in the session database 33.

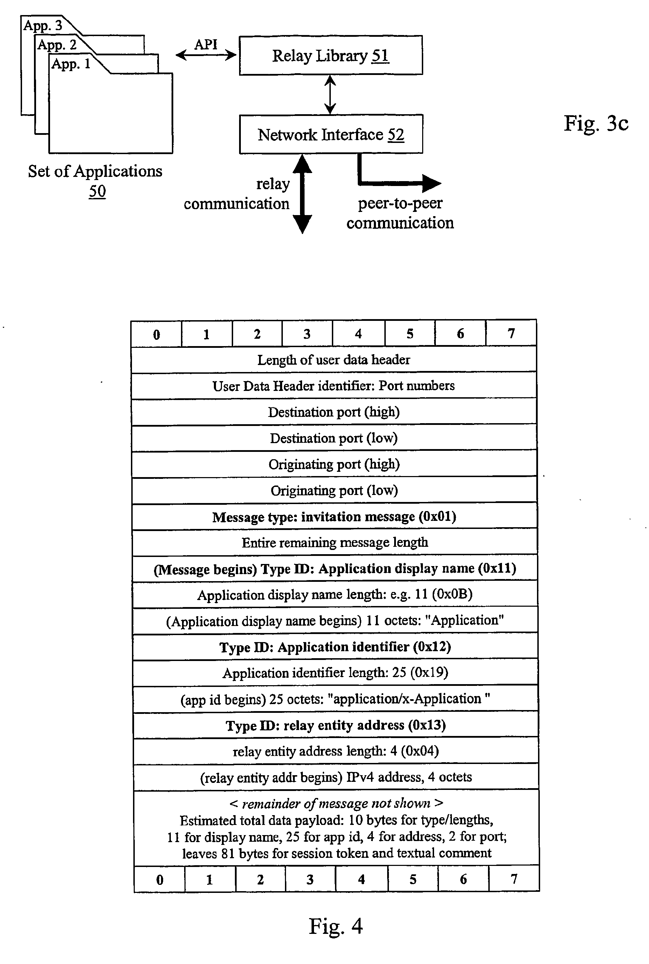

In order to provide a suitable usability of the inventive q-p2p connectivity, operations which require user interactions should be minimized as best as possible. The terminal implementations illustrated in Fig. 3b and 3c represent example implementations, which allow for provision of user-friendly and applicable usability.

Fig. 3b schematically shows a block diagram of components comprised in a terminal according to an embodiment of the present invention. A terminal implementation may comprise the components depicted illustratively in Fig. 3b to enable a terminal to perform at least semiautomatically the operations required on an invited terminal for utilizing and taking advantages of the q-p2p communication.

As described above, once an initiating terminal has effected the establishment of a new relay session to allow q-p2p connectivity, the initiating terminal is able to invite further terminals to participate therein by transmitting invitation requests thereto. The invitation requests may be delivered using any peer-to-peer communication mechanisms, which comprise SMS, EMS, MMS and any other types of instant messaging mechanisms including also future mechanisms.

The following example terminal implementation is based on the assumption that a peer-to-peer messaging mechanism is employed for conveying invitation requests.

In detail, the block diagram illustrates a network interface 40, a message dispatcher module 41, a dispatcher database 42, a message handler module 43 and a set of applications 45.

The message handler module 43 shall represent the conventional module in the terminal which is responsible for handling messages being based on the peer-to-peer messaging mechanism that is applied for invitation request conveyance. Such peer-to-peer messages received by the network interface 40 of the terminal are conventionally passed on to the message handler module 43. In order to at least semi-automate the handling, of invitation requests received by the terminal, a dispatcher module 41 is interposed between network interface 40 and message handler module 43 to handle invitation requests accordingly.

The message dispatcher module 41 is adapted to handle all invitation requests received by the terminal via its network interface 40. In detail, the message dispatcher module 41 is adapted to recognize an invitation request and to pass on the received and identified invitation request to a corresponding client application, which preferably take advantages of the q-p2p communication to be established by the invitation request. The passing on is generally accomplished by registering corresponding client applications to the message dispatcher module 41 for instance at installation time of the client applications.

The fact that several separate client applications may make use of the peer-to-peer connectivity requires that invitation requests comprise information for which application the invitation for participation in a q-p2p communication shall be directed, which especially may be achieved by an application identifier included in the invitation request. In parallel the message dispatcher module 41 maintains information about associations of application identifiers and corresponding applications out of a set of registered clients applications 45 installed on the terminal. The association information may be stored in a dispatcher database 42 managed by the message dispatcher module 41 accordingly.

By the means of the application identifier coded in an invitation request and the association information the message dispatcher module 41 is able to identify the client application determined by the application identifier, to initiate the determined client application (if required) and to pass on the invitation message to the determined client application. The determined client application is responsible in the following to handle the invitation message accordingly, i.e. to decode and interpret the invitation message. In detail, the client application may be responsible to establish the communication connection to the relay entity, to request for participation at the relay entity and to employ the established communication connection with the relay entity for data communication with the one or more terminals participating in the q-p2p communication.

Furthermore, the message dispatcher module 41 may be responsible to indicate the received invitation message to the user of the terminal asking the user to accept or reject the invitation. A corresponding acknowledge may be prompt by a display of the terminal to the user informing about sender of the invitation request and a designation of the determined client application (e.g. a clear text identification / application name). Moreover, the message dispatcher module 41 may also generate and transmit a response message in response on the inviting terminal informing the inviting terminal and the user thereof about the decision of the user of the invited terminal.

An example protocol message relating to an invitation request will be described with reference to Fig. 4.

Fig. 3c schematically shows a block diagram of further components comprised in a terminal according to an embodiment of the present invention. A terminal implementation may comprise the further components depicted illustratively in Fig. 3c to enable a terminal to perform the operations required for taking advantages of the inventive quasi peer-to-peer connectivity with at least one other terminal.

In detail, the block diagram illustrates a set of applications 50, a relay library 51 and a network interface 52. The relay library 51 is primarily intended to support communication with a relay entity serving for data relay services in accordance with an embodiment of the invention. In particular, the relay library 51 is intended to support establishment of a communication connection with the relay entity as well as managing requests/responses relating to an initiation of a relay session and/or relating to a participation in an established relay session. On the one side, the relay library 51 provides an application program interface (API), on the basis of which client application linked thereto accesses functions provided by the relay library. On the other side, the relay library 51 is linked to the network libraries / components which allow communications with the relay entity via the over-to-air network interface of the terminal.

Referring to an initiating terminal initiating a relay session on a relay entity, the relay library 51 may provide a method for establishing a communication connection to the relay entity for instance designated as "CreateConnection(relay address information)", which may require only an address information of the relay to be contacted, e.g. a telephone number, an internet protocol (IP) address, a uniform resource indicator (URI), a uniform resource locator (URL) etc.

Referring to an inviting terminal inviting one or more further terminals to participate in an established relay session, the library 51 may provide a method for communicating an invitation message to the one or more terminals, for instance designated as "InviteTerminals (address information)", which may require only address information of the one or more terminals to be invited, e.g. telephone numbers, an internet protocol (IP) address, a uniform resource indicator (URI), a uniform resource locator (URL) etc. Such address information may be selected from a local address directory of the terminal such as a telephone directory, a contact directory, etc.

Referring to an invited terminal wishing to participate in an established relay session, the relay library 51 may provide a method for establishing a communication connection to the relay entity for instance designated as "CreateConnection(relay address information, session related information)", which may require an address information of the relay to be contacted and session related information, especially a session identifier for participating in the relay session identified on the basis of the session related information.

Additionally, the relay library 51 may provide a method for parsing invitation messages received by a terminal to be invited in participating in a q-p2p communication for instance designated as "ParseInvitation(invitation message)", which results to well formed information about the initiating terminal, the application involved in the q-p2p communication, the relay entity, information about the relay session etc.

In case q-p2p communication is available for a terminal, the relay library 51 may provide methods for transmitting and receiving arbitrary data for instance designated as "P2PTransmit(arbitrary data)" and "arbitrary data = P2PReceive()", respectively.

Those skilled in the art will appreciate that the methods presented illustratively above outline only principles of a relay library implementation on the basis of coarse features. The relay library may also provide a soft configurable portion to code relay related information, especially relay address information. Moreover methods of the relay library may support a configuration of the transfer mechanism, transfer protocol; authentication etc applicable with communication connections to the relay entity and the q-p2p communication connections, respectively.

Such a relay library may be publicly available for being used by application programmers to allow their applications for q-p2p connectivity according to an embodiment of the invention by linking the relay library together with their client applications.

Fig. 4 shows a schematic example protocol structure of an invitation request according to an embodiment of the present invention. In principle the invitation request/message transmitted from an inviting terminal to one or more invited terminal may comprise several information, an example selection of which is denoted in the following list:
- client application display name,
   e.g. "Application";
- client application identifier,
   e.g. "application/x-Application";
- network address information of the relay entity,
   e.g. URI/port number: "relay.operator.com:8888";
- the session identifier (or session token) received from the relay entity,
   e.g. " kf9grjgawe32yj39dm3d";
- identifier of inviting terminal (or identifier user of the inviting terminal),
   e.g. a telephone number (for instance already present in a SMS message);
- a URI where to download the client application;
- a textual comment from the sending user,
   e.g. "Long time no play!"; and
- an expiration time for the invitation.

The invitation message may comprise one or more information listed above. As aforementioned, the invitation message may be communicated via a peer-to-peer communication mechanism comprises among others short message service (SMS) which may be formatted as a smart message (SM). The following description relates to an invitation message coded by the means of a short message. It shall be understood that the invention is not limited thereto.

An invitation message on the basis of a short message has to be distinguished at the receiving from conventional short messages. As explained above, the terminals may implement a so-called dispatcher module that receives the invitation message in the background. In an example implementation, the short message inbox application of the terminal may be augmented to act as a dispatcher module. The inbox application recognizes the message type to be an invitation message, and based on that it may activate a plug-in module designed to parse and interpret the invitation message. The plug-in module may be adapted to ask the user of the invited terminal whether he wants to accept the invitation and start the application described therein. The plug-in module may further deliver the contents of the invitation message to the client application determined by the invitation message, establish the communication connection to the relay entity and offer the established communication connection to the determined client application for taking advantages of the q-p2p communication connection.

In a particular case, the invitation message operable with SMS may be formatted as a Smart Message (SM), similar to a picture message. The invitation message should be allocated a specific port number (such as port number 49123) used to distinguish the invitation message from other types of smart messages. Traditional SMS based messages do not have a port number at all since the port number specification is only used for smart messages. The wireless datagram protocol (WDP) from WAP Forum should be used to interpret the port number.

A conventional SMS message is specified to hold up to 140 bytes of data. Commonly this is used to provide for 160 characters of text using a 7-bit alphabet. The WDP user data header (originating and destination port number) takes 7 bytes, leaving 133 bytes for user data content in a single short message coded as invitation message for coding information relating to the invitation to a q-p2p communication connection.

The invitation message content may be formatted as a binary message in a type-length-value (TLV) fashion, giving the type, length and value fields in a triplet. Each type and length field is 8 bits long, and the length of the value can vary according to the length field (maximum 256 bytes). The types could be, for example, the ones listed in the table depicted below. Additional types may be added if necessary.

| Type | Description |
|---|---|
| 0x01 | invitation message |
| 0x02 | invitation response |
| 0x11 | application display name |
| 0x12 | application identifier |
| 0x13 | relay entity address (URI) |
| 0x14 | relay entity port |
| 0x15 | session identifier (token) |
| 0x16 | client application download address (URI) |
| 0x17 | textual comment |
| 0x18 | expiration time |

Basing of the aforementioned considerations and assumptions the invitation message can now be coded and structured as depicted illustratively in Fig. 4. The entire message is wrapped in a 0x01 type value to mark the length of the data. The order of the type fields inside the invitation message is not fixed but it is recommended that the invitation message contains fields required for proper operation of the invited terminal.

It seems from the table that there is enough room in a single SMS message to carry the needed information. There are 117 bytes left available for the client application display name, client application identifier (ID), the session identifier (session token) and a textual comment. Assuming, "Application" as client application display name, "application/x-Application" as client application identifier and "kf9grjgawe32yj39dm3d" as session identifier, there are 11 + 25 + 20 = 56 bytes used, still leaving 61 bytes unused. Concatenated messages supported by the SMS may be used if there is a need for extra information. However, the user of the inviting terminal would have to pay for several messages.

After the invitation message has been sent and in case the user of the invited terminal chooses to join, the client application will connect to the relay entity and may issue an application-specific signal that he has joined in the q-p2p communication connection. This allows the client applications to start communicating. The client application of the invited terminal will afterwards have to listen for data traffic on the communication connection to the relay entity.

Normally, the user of the invited terminal does not have the possibility to respond to the invitation message without himself sending a message back. Since sending a message incurs costs to the user, he may not want to send any response. The inviting terminal will therefore have to have a normal timeout to the invitation.

However, the user of the invited terminal may send a polite response for declining the relay session. A response message format can be specified similarly to the invitation message described in detail above. The response message would use the same set of fields as the invitation message, with the exception that the entire response message would be wrapped in the 0x02 type, indicating a response message rather than an invitation message. The only required fields for the invitation response may comprise the session identifier (session token) (0x15) for reference and a textual comment for the user of the inviting terminal (0x17).

As the user of the invited terminal sends the response message back to the user of the inviting terminal, the determined counterpart client application of the inviting terminal may handle the invitation response message, ceasing to wait for the invited terminal to join the client application and displaying a textual comment to the user. A response message may be sent only in case the user of the invited terminal declines the invitation. In case he wants to accept, he needs to contact the relay entity and start q-p2p communication using the determined client application.

Conclusively, the concept of the quasi peer-to-peer connectivity of the present invention has been described on the basis of embodiments relating to the operation and implementation of relay entities and mobile terminals, which allow establishment and utilization of a quasi peer-to-peer communication between several mobile terminals, the data communication of which is relayed by a corresponding relay entity operating a relay session associated to the quasi peer-to-peer communication. The inventive concept enables to realize quasi peer-to-peer communications between terminals using data packet switched services for data communication therebetween,

This inventive concept offers several advantages in operation. The relay entity according to the present invention performs its data relay services for allowing quasi peer-to-peer communication between mobile terminals on the basis of a protocol framework for initiating a relay session and participating terminals therein. The data relay service itself handle arbitrary data contents that means that client applications operated on the mobile terminals may communicate any data via the established quasi peer-to-peer communication connection between them. The relay entity represents a generic relay entity supporting exchange of entirely different data between mobile terminals; the relay entity and data relay service, respectively, according to the present invention does not perform any action on the relayed data but simply replays the data to be exchanged for transmission to each remaining terminal participating in a quasi peer-to-peer communication.

In accordance with the inventive network architecture, the relay entity may be implemented as a public available; a closed community; a home-based; a client application specific relay entity and data relay service, respectively or the like. The relay entity or data relay service may be part of a fixed network inside a public land mobile network (PLMN) offering data relay service for terminals of the PLMN. Alternatively the relay entity or data relay service may be connected to a fixed network outside of the PLMNs in which the mobile terminals are subscribed and inter-coupled via any network connection (such as the internet) to the PLMNs. The relay entity and data relay service, respectively, is preferably connected to a fixed packet switched network. The mobile terminals working over a packet switched service such as GPRS may use conventional access points such as gateway GPRS support nodes (GGSN) for transmitting and receiving data packets to and from the fixed packet switched network connecting to the relay entity and data relay service, respectively.

The communication connection to the relay entity is initiated and established by the terminals that wish to participate in quasi peer-to-peer connectivity. Since each terminal initiates its own communication connection, policing network entities such as firewalls, or traffic managing entities such as NAT routers which may block incoming data traffic do not represent any problem in data traffic handling which may otherwise block incoming data traffic.

Moreover, the generic relay entity and data relay service is not limited in use to any transfer mechanisms and data transmission protocols. Both relay entity and terminals have only to support the employed transfer mechanism and data transmission protocol. Transmission control protocol (TCP) or user datagram protocol (UDP) represent typical transmission protocols employed in conjunction with packet switched data transmission. For example, the communication between a mobile terminal and a relay entity may be completely operated over TCP comprising protocol message communication and quasi peer-to-peer data communication. In an alternative example, the protocol message communication between a mobile terminal and a relay entity may be operated over TCP whereas the quasi peer-to-peer data communication may be operated over UDP, a port of which may be assigned by the relay entity and communicated to the mobile terminal the protocol message relating to a positive response ("NEW_SESSION_OK", "JOIN_SESSION_OK"). Of course different and future transmission protocols and transfer mechanisms may be utilized for protocol message and/or quasi peer-to-peer data communication in a similar or same way.

Typical client applications taking advantages of a quasi peer-to-peer connectivity according to the present invention are among others game client applications supporting multi-player environments. Such multi-player game client applications take advantages of a peer-to-peer connectivity according to the present invention using the generic relay entity in substitution of specific game application related multi-player servers. The quasi peer-to-peer connectivity allows for establishing direct terminal end-to-end data communication required in multi-player environment. The generic relay entity and generic data relay service, respectively, offering the relaying of arbitrary data is applicable to several (game) client applications exchanging completely different data contents since the generic relay entity simply multiplies arbitrary data contents upon the participating mobile terminals without processing, modifying and the like thereof. The quasi peer-to-peer connectivity allows to realize the direct (relayed) data communication between the participating mobile terminals over a period of time in which an established quasi peer-to-peer communication connection is used for communicating continuously data therebetween. The scope of the invention is only defined by the attached claims.

## Claims

1. Method, comprising:
- receiving (S120) data from one mobile terminal out of a set of mobile terminals (A, B, C) participating in a relayed peer-to-peer data communication (10), wherein said mobile terminals of said set of mobile terminals are subscribed in cellular communication networks;
- retrieving (S 130) information about destination mobile terminals, wherein said destination mobile terminals are those mobile terminals of said set of mobile terminals (A, B, C) except of said mobile terminal from which said data is received;
- replicating (S 140) said received data; and
- transmitting (S 150) said replicated data to each of said destination mobile terminals in accordance with said retrieved information about said destination mobile terminals.

2. Method according to claim 1, wherein said relayed peer-to-peer data communication (10) is associated with a relay session for handling data communication between mobile terminals of said set of mobile terminals (A, B, C), wherein said relay session needs to be established by an initiating mobile terminal.

3. Method according to claim 2, wherein said establishing of said relay session comprises:
- receiving (S220) a request for initiating said relay session from said initiating mobile terminal; wherein said request for initiation at least comprises an instruction to establish a new relay session forming said relay session; wherein said initiating mobile terminal becomes one mobile terminal out of said set of mobile terminals (A, B, C); and
- transmitting (S240) a response to said initiating terminal, wherein said response comprises at least a session identifier associated with said relay session.

4. Method according to claim 2 or claim 3, wherein each of said mobile terminals of said set of mobile terminals (A, B, C) with the exception of said initiating terminal are joining to said relay session to participate in said relayed peer-to-peer communication (10).

5. Method according to claim 4, wherein said joining to said relay session comprises:
- receiving (S350) a request for signing-up in said relay session from a signing-up mobile terminal, wherein said request for signing-up comprises at least said session identifier; and
- joining (S360) said signing-up mobile terminal to said relay session identified by said session identifier such that said signing-up mobile terminal becomes one mobile terminal out of said set of mobile terminals (A, B, C).

6. Method according to anyone of the preceding claims, wherein said mobile terminals of said set of mobile terminals (A, B, C) authenticate before participating in said relayed peer-to-peer communication (10).

7. Method according to anyone of the preceding claims, wherein said mobile terminals of said set of mobile terminals (A, B, C) communicate over data packet switched services for communicating said data.

8. Method according to anyone of the preceding claims, wherein said mobile terminals of said set of mobile terminals (A, B, C) communicate via a protocol out of group of protocols comprising at least transmission control protocol, TCP, and user datagram protocol, UDP.

9. Method; comprising:
- transmitting (S110) data by a mobile terminal to be communicated to a set of mobile terminals (A, B, C) by transmitting said data to a relay entity in a relayed peer-to-peer data communication (10), which relay entity is adapted to replicate said data and transmit said replicated data to each of said mobile terminals of said set of mobile terminals (A, B, C) except of said mobile terminal transmitting said data, wherein said mobile terminals are subscribed in cellular communication networks; and
- receiving (S160, S170) data originating from one of said mobile terminals of said set of mobile terminals (A, B, C) by receiving said data from said one mobile terminal via said relay entity in said relayed peer-to-peer data communication (10), which relay entity is adapted to replicate said data and transmit said replicated data to each of said mobile terminals except of said one mobile terminal, from which said data originates.

10. Method according to claim 9, further comprising:
- establishing (S200) a relay session on said relay entity by transmitting an indication thereto; wherein said relay session is associated with said relayed peer-to-peer data communication (10) and handles data communication between said mobile terminals of said set of mobile terminals (A, B, C).

11. Method according to claim 10, wherein said establishing comprises:
- transmitting (S210) a request for initiation of said relay session to said relay entity, wherein said request for initiation comprises at least an instruction to establish a new relay session forming said relay session; wherein said mobile terminal transmitting said request for initiation becomes participant in said relayed peer-to-peer data communication (10); and
- receiving (S250) a response from said relay entity, wherein said response comprises at least a session identifier associated with said relay session.

12. Method according to claim 9, further comprising:
- joining (S450) to a relay session on an indication transmitted to said relay entity.

13. Method according to claim 12, wherein said joining comprises:
- transmitting (S540) a request for signing-up to said relay session, wherein said request for signing-up comprises at least a session identifier; wherein said mobile terminal transmitting said request for signing-up becomes participant in said relayed peer-to-peer data communication (10).

14. Method according to claim 11 or 13, further comprising:
- inviting (S410) at least one mobile terminal of said set of mobile terminals to participate in said relayed peer-to-peer data communication (10) by transmitting a request for invitation to said mobile terminal receiving said request for invitation such that said mobile terminal receiving said request for invitation is enabled to join to said relay session, wherein said request for invitation comprises at least said session identifier, which is associated with said relay session.

15. Method according to claim 11, 13 or 14, further comprising:
- receiving (S420) a request for invitation from one mobile terminal of said set of mobile terminals such that said mobile terminal receiving said request for invitation is enabled to join to said relay session, wherein said request for invitation comprises at least said session identifier that is associated with said relay session.

16. Method according to claim 14 or 15, wherein said request for invitation is communicated via a peer-to-peer communication mechanism including a peer-to-peer messaging mechanism.

17. Method according to anyone of the claims 9 to 16, wherein said mobile terminals out of said set of mobile terminals authenticate at said relay entity.

18. Method according to anyone of the claims 9 to 17, wherein said mobile terminals out of said set of mobile terminals communicate over data packet switched services for communicating said data.

19. Method according to anyone of the claims 9 to 18, wherein said mobile terminals out of said set of mobile terminals communicate via a protocol out of group of protocols comprising at least transmission control protocol, TCP, and user datagram protocol, UDP.

20. Method, comprising a set of mobile terminals subscribed in cellular communication networks and a relay entity, wherein said mobile terminals of said set of mobile terminals (A, B, C) communicate in a relayed peer-to-peer data communication (10) and are adapted for carrying out operations of anyone of the claims 9 to 19, wherein said relay entity is adapted for carrying out operations of anyone of the claims 1 to 8.

21. Computer program product, comprising program code sections for carrying out the steps of anyone of claims 1 to 20, when said program code sections are run on a computer, a terminal, a network device, a mobile terminal or a mobile communication enabled terminal.

22. Computer program product according to claim 21, wherein said program code sections are stored on a machine-readable medium.

23. Relay entity, comprising:
- a network interface (30) adapted for receiving requests and data associated with a relayed peer-to-peer communication (10) and for transmitting responses and said data associated with said relayed peer-to-peer communication (10);
- a protocol handler module (31) adapted for handling requests received from a set of mobile terminals (A, B, C), which are subscribed in cellular communication networks, wherein said requests comprise at least requests for initiating a relay session, and requests for signing-up a mobile terminal to said relay session; and
- a redirector module (32) adapted for handling said data associated with said relayed peer-to-peer communication (10) on the basis of a relay session associated with said peer-to-peer communication; wherein said data received from one mobile terminal of said set of mobile terminals (A, B, C) is replicated at said relay entity and transmitted to destination mobile terminal, which are those mobile terminals of said set of said mobile terminals except of said one mobile terminal, from which said data is received.

24. Relay entity according to claim 23, wherein said protocol handler module (31) is further adapted for parsing said requests and configuring said relay session accordingly.

25. Relay entity according to claim 23 or claim 24, further comprising:
- a relay session database (33) which is adapted to store and provide information about said relay session.

26. Mobile terminal, comprising:
- a cellular communication interface (40, 52) adapted for transmitting requests and data to be communicated to a set of mobile terminals (A, B, C) by transmitting said data to a relay entity and adapted for receiving data originating from one mobile terminal of said set of mobile terminals by receiving said data from said relay entity, wherein said requests comprise at least requests for initiating a relay session, requests for signing-up a mobile terminal to said relay session, wherein said data are associated with a relayed peer-to-peer communication (10) between said mobile terminals of said set of mobile terminals (A, B, C), which are subscribed in cellular communication networks; and
- peer-to-peer communication module (51) adapted for exchanging data between said cellular communication interface (40, 52) and at least one application (45, 50) operable on said mobile terminal, wherein said peer-to-peer communication module (51) is adapted to generate and transmit requests to the said relay entity, to supply said data provided by said at least one application (45, 50) to be transmitted to those mobile terminals of said set of mobile terminals (A, B, C) except of said one mobile terminal transmitting said data, to said cellular communication interface (40, 52); and to supply said data, which originates from one mobile terminal of said set of mobile terminals (A, B, C) and is provided by said communication interface (40, 52), to said at least one application (45, 50).

27. Mobile terminal according to claim 26, further comprising:
- a dispatcher module (41) for parsing messages received via a peer-to-peer communication mechanism to determine whether said message is a request for invitation; for supplying parsing results to said at least one application (45, 50) to enable said at least one application (45, 50) to employ said relayed peer-to-peer communication (10).

28. Mobile terminal according to claim 27, further comprising:
- a dispatcher database (42) adapted for registering applications operable on said mobile terminal on the basis of application identifiers; wherein said application identifiers are employed to identify said at least one application (45, 50), which is addressed by said request for invitation.

29. System, comprising a set of mobile terminals subscribed in cellular communication networks and a relay entity, wherein each mobile terminal of said set of mobile terminals (A, B, C) corresponds to a mobile terminal according to anyone of the claims 26 to 28, wherein said relay entity corresponds to a relay entity according to anyone of the claims 23 to 25.

## Patentansprüche

1. Verfahren, umfassend:
- Empfangen (S 120) von Daten von einem mobilen Endgerät aus einer Gruppe mobiler Endgeräte (A, B, C), die an einer weitergeleiteten Peer-to-Peer-Datenkommunikation (10) teilnehmen, wobei die mobilen Endgeräte der Gruppe mobiler Endgeräte Teilnehmer in zellularen Kommunikationsnetzen sind;
- Abrufen (S130) von Informationen über mobile Ziel-Endgeräte, wobei die mobilen Ziel-Endgeräte die mobilen Endgeräte aus der Gruppe der mobilen Endgeräte (A, B, C) außer dem mobilen Endgerät sind, von dem die Daten empfangen werden;
- Vervielfältigen (S 140) der empfangenen Daten; und
- Übertragen (S150) der vervielfältigten Daten an jedes der mobilen Ziel-Endgeräte gemäß den abgerufenen Informationen über die mobilen Ziel-Endgeräte.

2. Verfahren nach Anspruch 1, wobei die weitergeleitete Peer-to-Peer-Datenkommunikation (10) mit einer Weiterleitungssitzung zum Abwickeln von Datenkommunikation zwischen mobilen Endgeräten aus der Gruppe der mobilen Endgeräte (A, B, C) verknüpft ist, wobei die Weiterleitungssitzung durch ein einleitendes mobiles Endgerät aufgebaut werden muss.

3. Verfahren nach Anspruch 2, wobei das Aufbauen der Weiterleitungssitzung umfasst:
- Empfangen (S220) einer Anforderung zum Einleiten der Weiterleitungssitzung von dem einleitenden mobilen Endgerät; wobei die Anforderung zum Einleiten zumindest eine Anweisung umfasst, eine neue Weiterleitungssitzung aufzubauen, welche die Weiterleitungssitzung bildet; wobei das einleitende mobile Endgerät ein mobiles Endgerät aus der Gruppe mobiler Endgeräte (A, B, C) wird; und
- Übertragen (S240) einer Antwort an das einleitende mobile Endgerät, wobei die Antwort zumindest eine Sitzungskennung umfasst, die mit der Weiterleitungssitzung verknüpft ist.

4. Verfahren nach Anspruch 2 oder 3, wobei jedes der mobilen Endgeräte aus der Gruppe von mobilen Endgeräten (A, B, C) mit Ausnahme des einleitenden Endgeräts der Weiterleitungssitzung beitritt, um an der weitergeleiteten Peer-to-Peer-Kommunikation (10) teilzunehmen.

5. Verfahren nach Anspruch 4, wobei das Beitreten zu der Weiterleitungssitzung umfasst:
- Empfangen (S350) einer Anforderung zum Anmelden zu der Weiterleitungssitzung von einem anmeldenden mobilen Endgerät, wobei die Anforderung zum Anmelden zu der Weiterleitungssitzung zumindest die Sitzungskennung umfasst; und
- Beitreten (S360) des anmeldenden mobilen Endgeräts zu der Weiterleitungssitzung, die durch die Sitzungskennung identifiziert wird, so dass das anmeldende mobile Endgerät ein mobiles Endgerät aus der Gruppe der mobilen Endgeräte (A, B, C) wird.

6. Verfahren nach einem der vorhergehenden Ansprüche, wobei die mobilen Endgeräte aus der Gruppe von mobilen Endgeräten (A, B, C) sich authentifizieren, bevor sie an der weitergeleiteten Peer-to-Peer-Kommunikation (10) teilnehmen.

7. Verfahren nach einem der vorhergehenden Ansprüche, wobei die mobilen Endgeräte aus der Gruppe von mobilen Endgeräten (A, B, C) über datenpaketvermittelte Dienste kommunizieren, um die Daten zu übermitteln.

8. Verfahren nach einem der vorhergehenden Ansprüche, wobei die mobilen Endgeräte aus der Gruppe von mobilen Endgeräten (A, B, C) über ein Protokoll aus einer Gruppe von Protokollen kommunizieren, welche zumindest Übertragungssteuerungsprotokoll, TCP, und Benutzer-Datagramm-Protokoll, UDP, umfassen.

9. Verfahren, umfassend:
- Übertragen (S 110) von Daten durch ein mobiles Endgerät, die zu einer Gruppe von mobilen Endgeräten (A, B, C) übermittelt werden sollen, indem die Daten zu einer Weiterleitungseinheit in einer weitergeleiteten peer-to-peer Datenkommunikation (10) übertragen werden, wobei die Weiterleitungseinheit angepasst ist, die Daten zu vervielfältigen und die vervielfältigten Daten zu jedem der mobilen Endgeräte aus der Gruppe von mobilen Endgeräten (A, B, C) zu übertragen, außer zu dem mobilen Endgerät, welches die Daten überträgt, wobei die mobilen Endgeräte Teilnehmer in zellularen Kommunikationsnetzen sind; und
- Empfangen (S 160, S 170) von Daten, die von einem der mobilen Endgeräte aus der Gruppe von mobilen Endgeräten (A, B, C) stammen, indem die Daten von dem einen mobilen Endgerät über die Weiterleitungseinheit in der weitergeleiteten Peer-to-Peer-Datenkommunikation (10) empfangen werden, wobei die Weiterleitungseinheit dazu angepasst ist, die Daten zu vervielfältigen und die vervielfältigten Daten zu jedem der mobilen Endgeräte zu übertragen, außer zu dem einen mobilen Endgerät, von dem die Daten stammen.

10. Verfahren nach Anspruch 9, weiter umfassend:
- Aufbauen (S200) einer Weiterleitungssitzung auf der Weiterleitungseinheit durch Übertragen einer Angabe dorthin, wobei die Weiterleitungssitzung mit der weitergeleiteten Peer-to-Peer-Datenkommunikation (10) verknüpft ist und Datenkommunikation zwischen den mobilen Endgeräten aus der Gruppe von mobilen Endgeräten (A, B, C) abwickelt.

11. Verfahren nach Anspruch 10, wobei das Aufbauen umfasst:
- Übertragen (S210) einer Anforderung zur Einleitung der Weiterleitungssitzung an die Weiterleitungseinheit, wobei die Anforderung zur Einleitung zumindest eine Anweisung umfasst, eine neue Weiterleitungssitzung aufzubauen, welche die Weiterleitungssitzung bildet; wobei das mobile Endgerät, welches die Anforderung zur Einleitung überträgt, ein Teilnehmer in der weitergeleiteten Peer-to-Peer-Datenkommunikation (10) wird; und
- Empfangen (S250) einer Antwort von der Weiterleitungseinheit, wobei die Antwort mindestens eine mit der Weiterleitungssitzung verknüpfte Sitzungskennung umfasst.

12. Verfahren nach Anspruch 9, weiter umfassend:
- Beitreten (S450) zu einer Weiterleitungssitzung auf eine Angabe hin, die zu der Weiterleitungseinheit übertragen wird.

13. Verfahren nach Anspruch 12, wobei das Beitreten umfasst:
- Übertragen (S540) einer Anforderung zum Anmelden zu der Weiterleitungssitzung, wobei die Anforderung zum Anmelden mindestens eine Sitzungskennung umfasst; wobei das mobile Endgerät, welches die Anforderung zum Anmelden überträgt, ein Teilnehmer in der weitergeleiteten Peer-to-Peer-Datenkommunikation (10) wird.

14. Verfahren nach Anspruch 11 oder 13, weiter umfassend:
- Einladen (S410) von mindestens einem mobilen Endgerät aus der Gruppe von mobilen Endgeräten, an der weitergeleiteten Peer-to-Peer-Datenkommunikation (10) teilzunehmen, indem eine Einladungsanforderung an das mobile Endgerät übertragen wird;
- Empfangen der Einladungsanforderung, so dass das mobile Endgerät, welches die Einladungsanforderung empfängt, in die Lage versetzt wird, der Weiterleitungssitzung beizutreten, wobei die Einladungsanforderung zumindest die Sitzungskennung umfasst, welche mit der Weiterleitungssitzung verknüpft ist.

15. Verfahren nach Anspruch 11, 13, oder 14, weiter umfassend:
- Empfangen (S420) einer Einladungsanforderung von einem mobilen Endgerät aus der Gruppe mobiler Endgeräte so, dass das mobile Endgerät, welches die Einladungsanforderung empfängt, in die Lage versetzt wird, der Weiterleitungssitzung beizutreten, wobei die Einladungsanforderung zumindest die Sitzungskennung umfasst, welche mit der Weiterleitungssitzung verknüpft ist.

16. Verfahren nach Anspruch 14 oder 15, wobei die Einladungsanforderung über einen Peer-to-Peer-Kommunikationsmechanismus übermittelt wird, welcher einen Peer-to-peer-Mitteilungs-Mechanismus umfasst.

17. Verfahren nach einem der Ansprüche 9 bis 16, wobei die mobilen Endgeräte aus der Gruppe von mobilen Endgeräten sich an der Weiterleitungseinheit authentifizieren.

18. Verfahren nach einem der Ansprüche 9 bis 17, wobei die mobilen Endgeräte aus der Gruppe von mobilen Endgeräten (A, B, C) über datenpaketvermittelte Dienste kommunizieren, um die Daten zu übermitteln.

19. Verfahren nach einem der Ansprüche 9 bis 18, wobei die mobilen Endgeräte aus der Gruppe von mobilen Endgeräten (A, B, C) über ein Protokoll aus einer Gruppe von Protokollen kommunizieren, welche zumindest Übertragungssteuerprotokoll, TCP, und Benutzer-Datagramm-Protokoll, UDP, umfassen.

20. Verfahren, umfassend eine Gruppe von mobilen Endgeräten, die Teilnehmer in zellularen Kommunikationsnetzen sind, und eine Weiterleitungseinheit, wobei die mobilen Endgeräte aus der Gruppe von mobilen Endgeräten (A, B, C) in einer weitergeleiteten Peer-to-peer-Datenkommunikation (10) kommunizieren, und dazu angepasst sind, Vorgänge nach einem der Ansprüche 9 bis 19 auszuführen, wobei die Weiterleitungseinheit dazu angepasst ist, Vorgänge nach einem der Ansprüche 1 bis 8 durchzuführen.

21. Computerprogrammprodukt, umfassend Programmcodeabschnitte zum Ausführen der Schritte von einem der Ansprüche 1 bis 20, wenn die Programmcodeabschnitte auf einem Computerterminal, einer Netzvorrichtung, einem mobilen Endgerät oder einem mobilen Kommunikationsendgerät ausgeführt werden.

22. Computerprogrammprodukt nach Anspruch 21, wobei die Programmcodeabschnitte auf einem maschinenlesbaren Medium gespeichert sind.

23. Weiterleitungseinheit, umfassend:
- eine Netzschnittstelle (30), angepasst zum Empfangen von Anforderungen und Daten, die mit einer weitergeleiteten Peer-to-Peer-Kommunikation (10) verknüpft sind, und zum Übertragen von Antworten und den Daten, die mit der weitergeleiteten Peer-to-Peer-Kommunikation (10) verknüpft sind;
- ein Protokoll-Abwicklungs-Modul (31), das dazu eingerichtet ist, Anforderungen abzuwickeln, die von einer Gruppe von mobilen Endgeräten (A, B, C) empfangen werden, die Teilnehmer in zellularen Kommunikationsnetzen sind, wobei die Anforderungen zumindest Anforderungen zum Einleiten einer Weiterleitungssitzung, und Anforderungen zum Anmelden eines mobilen Endgeräts zu der Weiterleitungssitzung umfassen; und
- ein Umleitungsmodul (32), das angepasst ist, die Daten abzuwickeln, die mit der weitergeleiteten Peer-to-Peer-Kommunikation (10) verknüpft sind, auf Basis einer Weiterleitungssitzung, die mit der Peer-to-Peer-Kommunikation verknüpft ist; wobei die Daten, die von einem mobilen Endgerät aus der Gruppe mobiler Endgeräte (A, B, C) empfangen werden, an der Weiterleitungseinheit vervielfältigt werden und an ein mobiles Zielendgerät übertragen werden, was die mobilen Endgeräte aus der Gruppe von mobilen Endgeräten außer dem einen mobilen Endgerät sind, von dem die Daten empfangen werden.

24. Weiterleitungseinheit nach Anspruch 23, wobei das Protokoll-Abwicklungs-Modul (31) weiter zum Analysieren der Anforderungen und zum entsprechenden Einrichten der Weiterleitungssitzung angepasst ist.

25. Weiterleitungseinheit nach Anspruch 23 oder 24, weiter umfassend:
- eine Weiterleitungssitzungsdatenbank (33), die angepasst ist, Informationen über die Weiterleitungssitzung zu speichern und bereitzustellen.

26. Mobiles Endgerät, umfassend:
- eine zellulare Kommunikationsschnittstelle (40, 52), angepasst zum Übertragen von Anforderungen und Daten, die zu einer Gruppe von mobilen Endgeräten (A, B, C) durch Übertragen der Daten zu einer Weiterleitungseinheit übermittelt werden sollen, und dazu angepasst, Daten zu empfangen, die von einem mobilen Endgerät aus der Gruppe mobiler Endgeräte stammen, indem die Daten von der Weiterleitungseinheit empfangen werden, wobei die Anforderungen zumindest Anforderungen zum Einleiten einer Weiterleitungssitzung, und Anforderungen zum Anmelden eines mobilen Endgeräts zu der Weiterleitungssitzung umfassen, wobei die Daten mit einer weitergeleiteten Peer-to-Peer-Kommunikation (10) zwischen den mobilen Endgeräten aus der Gruppe von mobilen Endgeräten (A, B, C) verknüpft sind, die Teilnehmer n zellularen Kommunikationsnetzen sind; und
- ein Peer-to-Peer-Kommunikationsmodul (51), angepasst zum Austauschen von Daten zwischen der zellularen Kommunikationsschnittstelle (40, 52) und mindestens einer auf dem mobilen Endgerät ausführbaren Anwendung (45, 50), wobei das Peer-to-Peer-Kommunikationsmodul (51) dazu angepasst ist, Anforderungen an die Weiterleitungseinheit zu erzeugen und zu übertragen, um die Daten, die von der mindestens einen Anwendung (45, 50) bereitgestellt werden und zu den mobilen Endgeräten aus der Gruppe mobiler Endgeräte (A, B, C) außer dem einen mobilen Endgerät, das die Daten überträgt, übertragen werden sollen, an die zellulare Kommunikationsschnittstelle (40, 52) zu liefern; und die Daten, die von einem mobilen Endgerät aus der Gruppe mobiler Endgeräte (A, B, C) stammen und von der Kommunikationsschnittstelle (40, 52) bereitgestellt werden, an die mindestens eine Anwendung (45, 50) zu liefern.

27. Mobiles Endgerät nach Anspruch 26, weiter umfassend:
- ein Zuteilungsmodul (41) zum Analysieren von Nachrichten, die über einen Peer-to-Peer-Kommunikationsmechanismus empfangen wurden, um zu bestimmen, ob die Nachricht eine Einladungsanforderung ist; zum Liefern von Analyseergebnissen an die mindestens eine Anwendung (45, 50), um die mindestens eine Anwendung (45, 50) in die Lage zu versetzen, die weitergeleitete Peer-to-Peer-Kommunikation (10) zu nutzen.

28. Mobiles Endgerät nach Anspruch 27, weiter umfassend:
- eine Zuteilungsdatenbank (42), angepasst zum Registrieren von Anwendungen, die auf dem mobilen Endgerät betriebsfähig sind, auf Grundlage von Anwendungskennungen; wobei die Anwendungskennungen verwendet werden, um die mindestens eine Anwendung (45, 50) zu identifizieren, an welche die Einladungsanforderung gerichtet wird.

29. System, umfassend eine Gruppe mobiler Endgeräte, die Teilnehmer in zellularen Kommunikationsnetzen sind, und eine Weiterleitungseinheit, wobei jedes mobile Endgerät aus der Gruppe mobiler Endgeräte (A, B, C) einem mobilen Endgerät nach einem der Ansprüche 26 bis 28 entspricht, und wobei die Weiterleitungseinheit einer Weiterleitungseinheit gemäß einem der Ansprüche 23 bis 25 entspricht.

## Revendications

1. Procédé, comportant les étapes consistant à :
- recevoir (S 120) des données en provenance d'un terminal mobile appartenant à un ensemble de terminaux mobiles (A, B, C) prenant part à une communication de données d'homologue à homologue par relais (10), dans lequel lesdits terminaux mobiles qui appartiennent audit ensemble de terminaux mobiles sont abonnés dans des réseaux de communication cellulaire ;
- récupérer (S 130) des informations connexes à des terminaux mobiles de destination, dans lesquels lesdits terminaux mobiles de destination sont ces terminaux mobiles qui appartiennent audit ensemble de terminaux mobiles (A, B, C), à l'exception dudit terminal mobile à partir duquel lesdites données sont reçues ;
- reproduire (S 140) lesdites données reçues ; et
- transmettre (S 150) lesdites données reproduites à chacun desdits terminaux mobiles de destination selon lesdites informations récupérées connexes auxdits terminaux mobiles de destination.

2. Procédé selon la revendication 1, dans lequel ladite communication de données d'homologue à homologue par relais (10) est associée à une session de relais en vue de traiter une communication de données entre des terminaux mobiles qui appartiennent audit ensemble de terminaux mobiles (A, B, C), dans lequel ladite session de relais doit être établie par un terminal mobile d'initiation.

3. Procédé selon la revendication 2, dans lequel l'étape consistant à établir ladite session de relais comporte les étapes consistant à :
- recevoir (S220) une demande d'initiation de ladite session de relais à partir dudit terminal mobile d'initiation, dans laquelle ladite demande d'initiation comporte au moins une instruction destinée à établir une nouvelle session de relais formant ladite session de relais, et dans laquelle ledit terminal mobile d'initiation devient un terminal mobile dudit ensemble de terminaux mobiles (A, B, C) ; et
- transmettre (S240) une réponse audit terminal d'initiation, dans laquelle la réponse comporte au moins un identifiant de session associé à ladite session de relais.

4. Procédé selon la revendication 2 ou 3, dans lequel chacun desdits terminaux mobiles qui appartiennent audit ensemble de terminaux mobiles (A, B, C), à l'exception dudit terminal d'initiation, prend part à ladite session de relais afin de participer à ladite communication d'homologue à homologue par relais (10).

5. Procédé selon la revendication 4, dans lequel ladite étape consistant à prendre part à ladite session de relais comporte les étapes consistant à
- recevoir (S350) une demande d'inscription à ladite session de relais, en provenance d'un terminal mobile d'inscription, dans laquelle ladite demande d'inscription comporte au moins ledit identifiant de session ; et
- rejoindre (S360) ledit terminal mobile d'inscription à ladite session de relais identifié par ledit identifiant de session de sorte que ledit terminal mobile d'inscription devient un terminal mobile dudit ensemble de terminaux mobiles (A, B, C).

6. Procédé selon l'une quelconque des revendications précédentes, dans lequel lesdits terminaux mobiles qui appartiennent audit ensemble de terminaux mobiles (A, B, C) s'authentifient avant de prendre part à ladite communication d'homologue à homologue par relais (10).

7. Procédé selon l'une quelconque des revendications précédentes, dans lequel lesdits terminaux mobiles qui appartiennent audit ensemble de terminaux mobiles (A, B, C) communiquent sur des services à commutation de paquets de données afin de communiquer lesdites données.

8. Procédé selon l'une quelconque des revendications précédentes, dans lequel lesdits terminaux mobiles qui appartiennent audit ensemble de terminaux mobiles (A, B, C) communiquent par l'intermédiaire d'un protocole appartenant à un groupe de protocoles comportant au moins un protocole de commande de transmission, TCP, et un protocole de datagramme utilisateur, UDP.

9. Procédé, comportant les étapes consistant à :
- transmettre (S110) des données, au moyen d'un terminal mobile, destinées à être communiquées à un ensemble de terminaux mobiles (A, B, C) en transmettant lesdites données à une entité de relais dans une communication de données d'homologue à homologue par relais (10), laquelle entité de relais est apte à reproduire lesdites données et à transmettre lesdites données reproduites à chacun desdits terminaux mobiles qui appartiennent audit ensemble de terminaux mobiles (A, B, C), à l'exception dudit terminal mobile transmettant lesdites données, dans lequel lesdits terminaux mobiles sont abonnés dans des réseaux de communication cellulaire ; et
- recevoir (S 160, S 170) des données provenant de l'un desdits terminaux mobiles qui appartiennent audit ensemble de terminaux mobiles (A, B, C) en recevant lesdites données provenant dudit un terminal mobile par l'intermédiaire de ladite entité de relais dans ladite communication de données d'homologue à homologue par relais (10), laquelle entité de relais est apte à reproduire lesdites données et à transmettre lesdites données reproduites à chacun desdits terminaux mobiles, à l'exception dudit un terminal mobile duquel proviennent lesdites données.

10. Procédé selon la revendication 9, comportant en outre les étapes consistant à :
- établir (S200) une session de relais sur ladite entité de relais en transmettant une indication connexe, dans lequel ladite session de relais est associée à ladite communication de données d'homologue à homologue par relais (10) et traite une communication de données entre lesdits terminaux mobiles qui appartiennent audit ensemble de terminaux mobiles (A, B, C).

11. Procédé selon la revendication 10, dans lequel ledit établissement comporte les étapes consistant à :
- transmettre (S210) une demande d'initiation de ladite session de relais à ladite entité de relais, dans laquelle ladite demande d'initiation comporte au moins une instruction destinée à établir une nouvelle session de relais formant ladite session de relais ; dans laquelle ledit terminal mobile transmettant ladite demande d'initiation devient un participant à ladite communication de données d'homologue à homologue par relais (10) ; et
- recevoir (S250) une réponse de ladite entité de relais, dans laquelle ladite réponse comporte au moins un identifiant de session associé à ladite session de relais.

12. Procédé selon la revendication 9, comportant en outre l'étape consistant à :
- prendre part (S450) à une session de relais sur la base d'une indication transmise à ladite entité de relais.

13. Procédé selon la revendication 12, dans lequel ladite étape consistant à prendre part à une session de relais comporte l'étape consistant à :
- transmettre (S540) une demande d'inscription à ladite session de relais, dans laquelle ladite demande d'inscription comporte au moins un identifiant de session, dans laquelle ledit terminal mobile transmettant ladite demande d'inscription devient un participant dans ladite communication de données d'homologue à homologue par relais (10).

14. Procédé selon la revendication 11 ou 13, comportant en outre l'étape consistant à :
- inviter (S410) au moins un terminal mobile dudit ensemble de terminaux mobiles à participer à ladite communication de données d'homologue à homologue par relais (10) en transmettant une demande d'invitation audit terminal mobile recevant ladite demande d'invitation de sorte que ledit terminal mobile recevant ladite demande d'invitation est autorisé à se joindre à ladite session de relais, dans laquelle ladite demande d'invitation comporte au moins ledit identifiant de session, lequel est associé à ladite session de relais.

15. Procédé selon la revendication 11, 13 ou 14, comportant en outre l'étape consistant à :
- recevoir (S420) une demande d'invitation en provenance d'un terminal mobile dudit ensemble de terminaux mobiles de sorte que ledit terminal mobile recevant ladite demande d'invitation est autorisé à se joindre à ladite session de relais, dans laquelle ladite demande d'invitation comporte au moins ledit identifiant de session qui est associé à ladite session de relais.

16. Procédé selon la revendication 14 ou 15, dans lequel ladite demande d'invitation est communiquée par le biais d'un mécanisme de communication d'homologue à homologue comportant un mécanisme de messagerie d'homologue à homologue.

17. Procédé selon l'une quelconque des revendications 9 à 16, dans lequel lesdits terminaux mobiles qui appartiennent audit ensemble de terminaux mobiles s'authentifient au niveau de ladite entité de relais.

18. Procédé selon l'une quelconque des revendications 9 à 17, dans lequel lesdits terminaux mobiles qui appartiennent audit ensemble de terminaux mobiles communiquent sur des services à commutation de paquets de données en vue de communiquer lesdites données.

19. Procédé selon l'une quelconque des revendications 9 à 18, dans lequel lesdits terminaux mobiles qui appartiennent audit ensemble de terminaux mobiles communiquent par l'intermédiaire d'un protocole d'un groupe de protocoles comportant au moins un protocole de commande de transmission, TCP, et un protocole de datagramme utilisateur, UDP.

20. Procédé comportant un ensemble de terminaux mobiles abonnés dans des réseaux de communication cellulaire et une entité de relais, dans lequel lesdits terminaux mobiles qui appartiennent audit ensemble de terminaux mobiles (A, B, C) communiquent dans une communication de données d'homologue à homologue par relais (10) et sont aptes à mettre en oeuvre des opérations selon l'une quelconque des revendications 9 à 19, dans lequel ladite entité de relais est apte à mettre en oeuvre des opérations selon l'une quelconque des revendications 1 à 8.

21. Produit programme informatique, comportant des sections de code de programme pour mettre en oeuvre les étapes selon l'une quelconque des revendications 1 à 20, lorsque lesdites sections de code de programme sont exécutées sur un ordinateur, sur un terminal, sur un dispositif de réseau, sur un terminal mobile ou sur un terminal apte à des communications mobiles.

22. Produit programme informatique selon la revendication 21, dans lequel lesdites sections de code de programme sont stockées sur un support lisible par une machine.

23. Entité de relais, comportant :
- une interface de réseau (30) apte à recevoir des demandes et des données associées à une communication d'homologue à homologue par relais (10) et à transmettre des réponses et lesdites données associées à ladite communication d'homologue à homologue par relais (10) ;
- un module de traitement de protocoles (31) apte au traitement des demandes reçues en provenance d'un ensemble de terminaux mobiles (A, B, C), lesquels terminaux sont inscrits dans des réseaux de communication cellulaire, dans lequel lesdites demandes comportent au moins des demandes d'initiation d'une session de relais, et des demandes d'inscription d'un terminal mobile à ladite session de relais ; et
- un module redirecteur (32) apte à traiter lesdites données associées à ladite communication d'homologue à homologue par relais (10) sur la base d'une session de relais associée à ladite communication d'homologue à homologue, où lesdites données reçues d'un terminal mobile dudit ensemble de terminaux mobiles (A, B, C) sont reproduites au niveau de ladite entité de relais et transmises audit terminal mobile de destination, lesquels sont ces terminaux mobiles qui appartiennent audit ensemble desdits terminaux mobiles, à l'exception dudit terminal mobile à partir duquel lesdites données sont reçues.

24. Entité de relais selon la revendication 23, dans laquelle ledit module de traitement de protocoles (31) est en outre apte à analyser lesdites demandes et à configurer ladite session de relais en conséquence.

25. Entité de relais selon la revendication 23 ou 24, comportant en outre :
- une base de données de sessions de relais (33) qui est apte à stocker et à fournir des informations connexes à ladite session de relais.

26. Terminal mobile, comportant :
- une interface de communication cellulaire (40, 52) apte à transmettre des demandes et des données destinées à être communiquées à un ensemble de terminaux mobiles (A, B, C) en transmettant lesdites données à une entité de relais, et apte à recevoir des données provenant d'un terminal mobile dudit ensemble de terminaux mobiles en recevant lesdites données de ladite entité de relais, dans lesquelles lesdites demandes comportent au moins des demandes d'initiation d'une session de relais, des demandes d'inscription d'un terminal mobile à ladite session de relais, où lesdites données sont associées à une communication d'homologue à homologue par relais (10) entre lesdits terminaux mobiles qui appartiennent audit ensemble de terminaux mobiles (A, B, C ), lesquels sont inscrits dans les réseaux de communication cellulaire ; et
- un module de communication d'homologue à homologue (51) apte à échanger des données entre ladite interface de communication cellulaire (40, 52) et au moins une application (45, 50) qui est exploitable sur ledit terminal mobile, dans lequel ledit module de communication d'homologue à homologue (51) est apte à générer et à transmettre des demandes à ladite entité de relais, à fournir lesdites données, fournies par ladite au moins une application (45, 50), devant être transmises à ces terminaux mobiles qui appartiennent audit ensemble de terminaux mobiles (A, B, C), à l'exception dudit terminal mobile transmettant lesdites données, à ladite interface de communication cellulaire (40, 52), et à fournir lesdites données, lesquelles proviennent d'un terminal mobile dudit ensemble de terminaux mobiles (A, B, C) et lesquelles sont fournies par ladite interface communication (40, 52) à ladite au moins une application (45,50).

27. Terminal mobile selon la revendication 26, comportant en outre :
- un module répartiteur (41) pour analyser des messages reçus par l'intermédiaire d'un mécanisme de communication d'homologue à homologue afin de déterminer si ledit message est une demande d'invitation, et pour délivrer des résultats d'analyse à ladite au moins une application (45, 50) afin de permettre à ladite au moins une application (45, 50) d'utiliser ladite communication d'homologue à homologue par relais (10).

28. Terminal mobile selon la revendication 27, comportant :
- une base de données de répartiteur (42) apte à enregistrer des applications exploitables sur ledit terminal mobile sur la base d'identifiants d'application, dans lequel lesdits identifiants d'application sont utilisés pour identifier ladite au moins une application (45, 50), laquelle est adressée par ladite demande d'invitation.

29. Système comportant un ensemble de terminaux mobiles inscrits dans des réseaux de communication cellulaire et une entité de relais, dans lequel chaque terminal mobile dudit ensemble de terminaux mobiles (A, B, C) correspond à un terminal mobile selon l'une quelconque des revendications 26 à 28, dans lequel ladite entité de relais correspond à une entité de relais selon l'une quelconque des revendications 23 à 25.
